Europäisches Patentamt

European Patent Office

Office européen des brevets

(11) Publication number: **0 472 193 A2**

# EUROPEAN PATENT APPLICATION

(21) Application number: **91114073.9**

(22) Date of filing: **22.08.91**

(51) Int. Cl.⁵: **G10L 3/00**

(30) Priority: **23.08.90 JP 220072/90**
**27.08.90 JP 222561/90**
**27.08.90 JP 222562/90**
**27.08.90 JP 222563/90**
**27.08.90 JP 222564/90**
**31.08.90 JP 228194/90**
**10.09.90 JP 237208/90**
**10.09.90 JP 237209/90**
**31.10.90 JP 291980/90**

(43) Date of publication of application:
**26.02.92 Bulletin 92/09**

(84) Designated Contracting States:
**DE FR GB**

(71) Applicant: **Oki Electric Industry Co., Ltd.**
**7-12, Toranomon 1-chome Minato-ku**
**Tokyo(JP)**

(72) Inventor: **Tsujita, Waichiro, c/o OKI Electric**
**Ind. Co., Ltd.**
**7-12, Toranomon 1-chome**
**Minato-ku, Tokyo(JP)**
Inventor: **Hirayama, Kenichi, c/o OKI Electric**
**Ind. Co., Ltd.**
**7-12, Toranomon 1-chome**
**Minato-ku, Tokyo(JP)**
Inventor: **Hoshino, Kyosuke, c/o OKI Electric**
**Ind. Co., Ltd.**
**7-12, Toranomon 1-chome**
**Minato-ku, Tokyo(JP)**
Inventor: **Takahashi, Katsumi, c/o OKI Electric**
**Ind. Co., Ltd**
**7-12, Toranomon 1-chome**
**Minato-ku, Tokyo(JP)**
Inventor: **Miyamae, Toru, c/o OKI Electric**
**Industry Co., Ltd.**
**7-12, Toranomon 1-chome**
**Minato-ku, Tokyo(JP)**
Inventor: **Wada, Seiichi, c/o OKI Electric**
**Industry Co., Ltd.**
**7-12, Toranomon 1-chome**
**Minato-ku, Tokyo(JP)**
Inventor: **Murata, Takanori, c/o OKI Electric**
**Ind. Co., Ltd.**
**7-12, Toranomon 1-chome**
**Minato-ku, Tokyo(JP)**

(74) Representative: **Betten & Resch**
**Reichenbachstrasse 19**
**W-8000 München 5(DE)**

(54) **Translation device based on voice recognition and voice synthesis.**

(57) A voice processing device, such as a translation device based on voice recognition. The voice is inputted through microphone (10) while operation switch is held down. Voice recognition section (14, 20, 22) recognizes the word spoken in a certain language which is contained in this voice signal by searching voice recognition dictionary (22), and outputs an indication which represents the recognized word. The recognized word is visualized on display device (32). If the displayed word is what is wanted by a user, the user waits for prescribed duration (t0) from this point of time. When prescribed duration (t0) elapses, voice synthesis section (16) reads, decodes and decompresses the voice signal from translation dictionary (36) where the voice signal for the word expressed in other language is stored in the compression-encoded form, and vocally outputs it from speaker (12). Through this procedure, the word expressed in the different language is outputted from speaker (12), corresponding to the voice inputted through microphone (10). These vocally expressed words may be visualized on display device (32) by operating key (44). If the word, which is displayed on display device (32) by voice recognition, is not what the user wants, the user can operates key (44) to interrupt the voice, which is being outputted by voice synthesis section (16) and output prescribed common phrases in the vocal form. The

word to be inputted may be a key word, and in this case, voice synthesis section (16) outputs the sentences associated with the key word. Translation dictionary (36) take the form of storage medium (36) which is removably connected to the present device and is separately prepared for each of different languages and translation purposes. This removable storage medium (36) may contain renewable memory region (220a) for storing recognition dictionary (22). The voice signal of the user is renewably cataloged in recognition dictionary (22) as the reference voice signal in correspondence to the word. This cataloging is performed in the cataloging mode, but the cataloging is not performed, in response to the key operation by the user, for the word which

does not require the cataloging of the reference voice signal. Further, translation dictionary (22) carries identification codes which shows the types and purposes of the words, and in cataloging mode, if the identification code held by control section (26, 34, 28, 30, 24) matches the code (124) in translation dictionary (22), the cataloging is not performed. The indication outputted from voice recognition section (20, 14, 22) is held (58) by control section (26, 34, 28, 30, 24), and if the user inputs the command to re-output it, control section (26, 34, 28, 30, 24) makes voice synthesis section (16) re-output the voice signal, which corresponds to the indication, based on this held indication (58).

Fig. 1

# BACKGROUND OF THE INVENTION

## Field of the Invention

The present invention relates to a voice recognizing device, more particularly, a translating device capable of recognizing a vocally entered word and outputting the words corresponding to the recognized word.

## Description of the Prior Art

In recent years, with the progress of voice recognition technologies, voice controlled machinery have been proposed. These types of equipment utilize the voice recognition and voice synthesis technologies, which, for example, have been applied to a voice dial telephone, an automobile with voice controlled functions, and a voice-recognizing translation device. For example, the voice dial telephone is designed to recognize the name of a party to be called when it is inputted by vocalization of the name, and dials the number corresponding to the name. In the case of the automobile with voice controlled functions, it is provided with the functions for recognizing the speech sounds such as vocal operating instructions for wipers or a radio when they are inputted, and for automatically controlling the operations of these devices. As for the translating device, if words expressed in a certain language are vocally inputted, corresponding words, that is, the words expressed in a language different from the input, having yet the same meaning, are vocally outputted. For example, if "Ocha," a Japanese word, is vocally inputted, "Tea," an English word, is vocally outputted.

This type of a voice-recognizing translation device consists of a processing system, and generally, contains two functional sections, that is, a section for recognizing voices and another section for synthesizing voices. The former functional section, that is, the voice recognition section, recognizes voices in the following manner. Namely, the voice signals inputted through a microphone are converted into corresponding digital data, which is divided into voice segments based on power, and the power spectrum of each segment is analyzed to extract its characteristic quantities. The characteristic quantities obtained are compared to a reference pattern for the characteristic quantities, and the reference having the closest resemblance in characteristic quantities, that is, the reference pattern with a least deviation, is selected to output the code representing the selected reference pattern. The reference pattern data is stored in a memory called the recognition dictionary. Further, the result of the recognition is displayed on a display device so that the operator can check the result.

The remaining functional section, that is, the voice synthesis section, has ROMs which store the voice data corresponding to the codes and constitute the translation dictionary. The voice synthesis section searches this translation dictionary based on the codes outputted from the voice recognition section; extracts the corresponding voice data corresponding; converts them into analogue signals by synthesis; and outputs them as voices through a loud speaker, for example. The voice synthesis is conducted in this manner. The conversion accompanying a translating function is accomplished by storing, in these memories, the voice data of a language which is different from the vocally inputted language.

For example, in the case of the prior translating device, when it was used in a noisy environment and the voice from the speaker was hard to hear, the inputting operation of the voice had to be tried again. In such a case, it took a long time for the voice to be outputted second time since the device had to repeat the processes of voice input, voice recognition and voice synthesis.

There were times when a user wanted to change the output contents while the synthesized speech was being outputted. In such a case, the user had to wait for the completion of the output having the unintended contents, then newly input the desired words in the vocal form, following "I am sorry, I made a mistake," which was commonly used for the conversational corrections. Then, the device reacted to continue the processes of recognizing and vocally synthesizing these words. Therefore, there was the fault that it lacked the capability of responding instantly to the changes in the output contents.

When the voices from the people around the translating device were loud, their voices were also recognized, and as a result, a synthesized output unintended by the operator was often outputted. In such a case, an operational revision, such as holding the microphone closer to the mouth so that only the operator's voice was inputted, was necessary.

The recognized words were displayed on a visual display to be confirmed by the operator. The operator entered the result of the confirmation by operating corresponding keys. In the present state of the art, the voice recognition accuracy, which may still be insufficient, reaches 80% to 95%. Nevertheless, the operator was required to operate the keys even when the correct recognition was accomplished, and therefore, there was no way of avoiding the operational complexity.

In the prior voice-recognizing translating device, the amount of information in the output speech was the same as in the input one. Therefore, in order to obtain a vocal output with a large amount of information, that is, to obtain an output consisting of a long sentence, it was accordingly necessary to input a long vocal sentence, which presented the fault of increasing the vocalizing load on the operator.

The number of words and phrases in the dictionary depends on the capacity of the memory region, which had been interfering with the translation performance. In order to increase the translation performance, the use of memory devices with a larger storage capacity was necessary, which invited the enlargement of the devices. The enlargement of the dictionary section was also invited in the design of a translating device which handled multiple languages.

The vocalization by an operator depends on individual characteristics. Therefore, in order to enable the voices from various operators to be properly recognized, an initial cataloging must be performed before the device is used, in which words contained in the translation dictionary are pronounced so as to be inputted in the device so that their characteristic quantities are stored in the device as the reference pattern corresponding to the words in the translation dictionary. The cataloging of these reference patterns is performed in the initial cataloging mode of the device. In the initial cataloging mode, the words contained in the translation dictionary are read out one by one to be displayed on a display device, and the operator pronounces the displayed word to be vocally inputted in the device. The device recognizes the voice, that is, identifies and analyzes the individual segments in the word, and stores the characteristic quantities, as the reference pattern, in the work memory. This work memory section constitutes the above mentioned recognition dictionary.

In the prior device, it was necessary to perform this cataloging operation for every word stored in the translation dictionary, for example, 70 acts of cataloging if 70 words were stored. In addition, in order to average the characteristic features of the vocalization by the operator, each word was pronounced a number of times, for example three times, to assure the voice recognition. However, depending on the situation in which the operator used the translating device, it was quite often the case that the operator did not need to use all the word cataloged in the translation dictionary. Even in such a situation, the operation for cataloging the reference pattern had to be performed for the entire vocabulary during the initial cataloging mode in the case of the prior device. In the above mentioned case, 210 pronunciations were needed even in such a situation.

## SUMMARY OF THE INVENTION

It is therefore an object of the present invention to provide an improved voice-recognizing translating device. The specific purpose of the present invention is to offer a voice-recognizing translating device having a smaller size and improved operational characteristics.

In accordance with the present invention, a voice processing device comprises an input means for receiving a voice signal representing a word, a voice recognition means interconnected to the input means for recognizing the word represented by the voice signal and producing an indication representing the recognized word, an output means for reading out an output signal corresponding to the indication from a memory medium where the output signal is stored in correspondence to the indication, and a control means interconnected to the voice recognition means and output means for controlling the voice recognition means and output means so as to cause the output signal corresponding to the voice signal to be developed, and is characterized in that the control means comprises a holding means for holding the indication developed from the voice recognition means, and a command means for entering a command causing the output signal developed from the output means to be developed again, and when an indication is outputted from the voice recognition means, the control means stores the indication in the holding means and transfers it to the output means, and then transfers the indication held in the holding means to the output means in response to the command means.

## BRIEF DESCRIPTION OF THE DRAWINGS

The objects and features of the present invention will become more apparent from the consideration of the following detailed description taken in conjunction with the accompanying drawings in which:

FIG. 1 is a schematic block diagram showing a preferred embodiment of the translating device based on the present invention;

FIG. 2 is a schematic block diagram showing a structural example of the voice input section and voice recognition section of the embodiment shown in FIG. 1;

FIG. 3 illustrates the memory maps for the translation dictionary and work memory of the embodiment;

FIGS. 4A and 4B illustrate the contents of the translation dictionary of the embodiment;

FIG. 5 shows the operational flow for the detection of the condition in which the operation switch is pressed in the embodiment;

FIGS. 6 and 7 are oblique views showing the appearance of the embodiment realized as a portable translating device;

FIG. 8 is an oblique view showing the appearance of the embodiment realized as a desk top translation processing system;

FIG. 9 is a schematic block diagram showing the structure of the section in the embodiment for detecting the connection of a memory card;

FIG. 10 shows the operational flow in the embodiment for loading and sorting the memory card;

FIG. 11 shows the operational logic of the check circuit for checking the loading of the memory card shown in FIG. 9.

FIGS. 12A and 12B show the operational flow for the initial cataloging in the embodiment shown in FIG. 1;

FIG. 13 shows the operational flow for the voice recognition and voice synthesis in the embodiment;

FIGS. 14A through 16B are timing charts illustrating the timings of the voice recognition, display of the candidate word, and voice synthesis;

FIG. 17 is the flow chart showing the other example of the operational flow for the voice recognition in the embodiment;

FIG. 18 is similar to FIG. 3, showing the other structural example of the translation dictionary;

FIG. 19 is a schematic block diagram similar to FIG. 1., showing an alternative embodiment of the translating device based on the present invention;

FIG. 20 is a flow chart showing the second output operation in the embodiment shown in FIG. 19;

FIG. 21 is a memory map of translation similar to FIG. 13, showing the dictionary based on alternative configurational example;

FIG. 22 is a schematic block diagram showing a structural example of the main control section in the translating device wherein the translation dictionary shown in FIG. 21 is applied;

FIG. 23 is a flow chart showing the output operation of common phrases by the main control section shown in FIG. 21.

FIG. 24 is a schematic block diagram similar to FIG. 1, showing another alternative embodiment of the translation device based on the present invention;

FIG. 25 is a flow chart showing the initial cataloging check operation in the embodiment shown in FIG. 24;

FIG. 26 is a schematic block diagram similar to FIG. 24, showing another alternative embodiment of the translation device based on the present invention;

FIG. 27 a flow chart similar to FIG. 25, showing the initial cataloging check operation in the embodiment shown in FIG. 26;

FIGS. 28 and 29 are schematic block diagrams showing another alternative embodiment of the translation device based on the present invention;

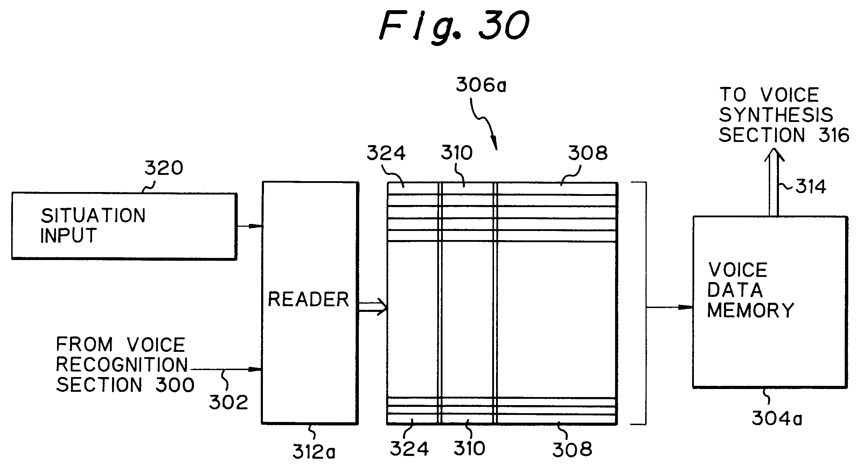

FIG. 30 is a schematic block diagram showing the structural example of the knowledge data base shown in FIG. 29; and

FIG. 31 is a flow chart showing the voice recognition and voice synthesis operations in the embodiment shown in FIG. 29.

## DESCRIPTION OF THE PREFERRED EMBODIMENTS

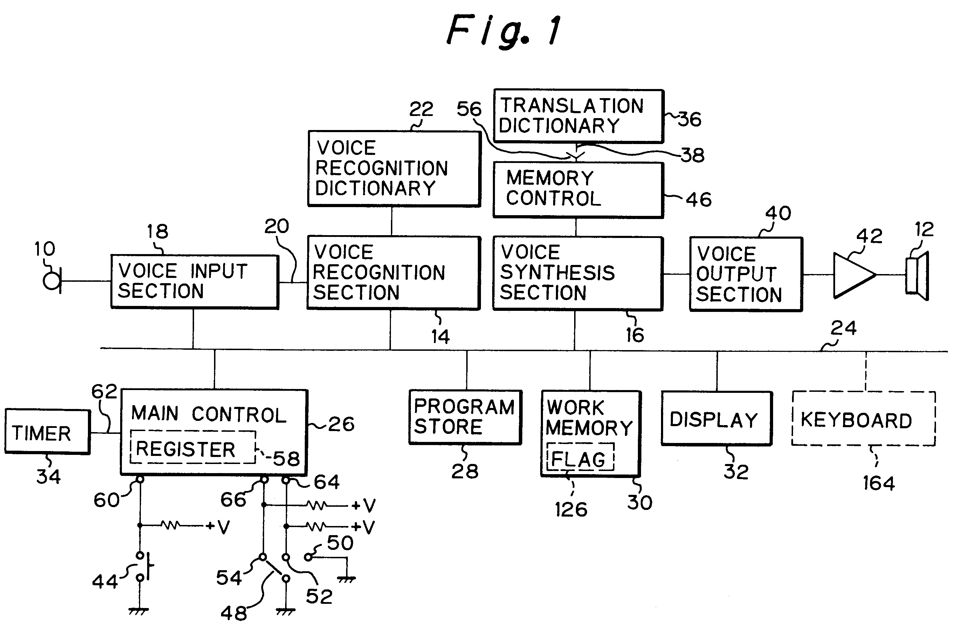

Referring to FIG. 1, the specific embodiment of the translation device based on the present invention is a device provided with microphone 10 and loud speaker 12, which recognizes the audio signals in the Japanese language form received through the microphone and outputs the corresponding speech, that is, the speech spoken in the different language form, through speaker 12. In this specification, it is to be understood that the word "translation" includes not only the conversion of a speech into speeches in different languages but also the conversion of a speech into speeches in local dialects or different expressions with the same meaning.

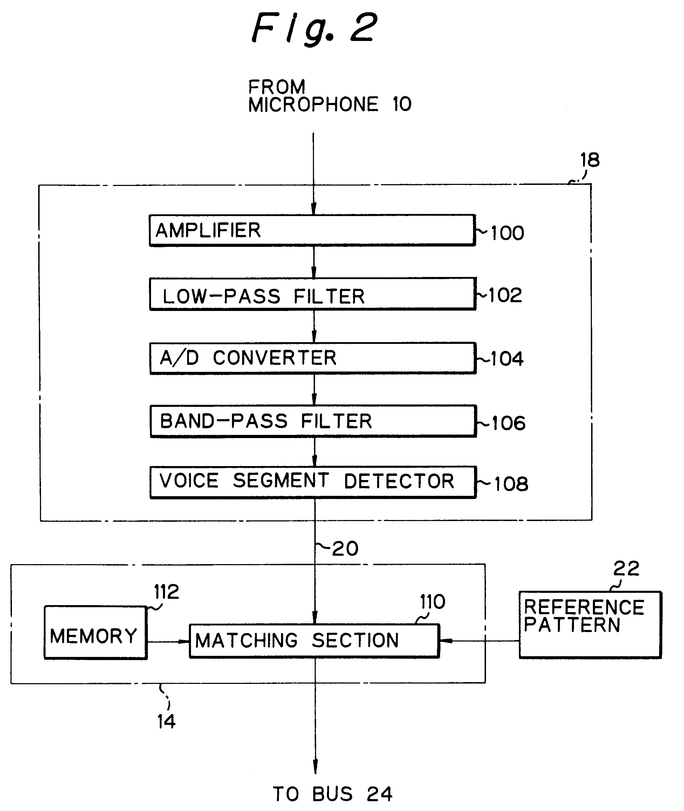

This device consists of a processing system, and generally contains two functional sections, that is, voice recognition section 14 and voice synthesis section 16. Voice recognition section 14 is connected to microphone 10 via voice input section 18. Voice input section 18, as is shown in FIG. 2, has amplifier 100 for amplifying the analog voice signals inputted through microphone 10; low pass filter 102 for regulating the output band of amplifier 100 to prevent the folded distortion; and analog-digital converter 104 for converting these signals into corresponding digital data. Voice input section 18 has also band-pass filter 106 for performing a frequency analysis of this digital data, and the voice data is converted into the power spectrums that are the final expression modes. This power spectrum data is inputted to voice segment detector 108 to detect the beginnings and the endings of voice segments of the power spectrums, thus detecting the voice segments, in other words, isolating the voice segments. The power spectrum data is inputted to voice recognition section 14, by the unit of each of the detected segments.

The voice recognition section 14 has matching section 110, and matching section 110 has the characteristic quantity extraction function for analyzing the power spectrum data inputted for each isolated voice segment, based on, for example, linear predictive coding analysis, to extract their characteristic quantities. As the characteristic quantity, the LPC spectrum for example, is preferably used. Voice recognition section 14 has memory 112, and the latter has a function for temporarily storing the characteristic quantity data.

Voice recognition section 14 is also connected to voice recognition dictionary 22. Voice recognition dictionary 22 contains a renewable memory, where the voice signal based on the pronunciation by a specific user is stored as the reference pattern, which will be explained later. Matching section 110 also has a similarity computation function for comparing the power spectrum of the obtained characteristic quantity to the reference pattern in recognition dictionary 22, so as to select the reference pattern having the closest similarity to the characteristic quantity. In other words, the deviation representing its dissimilarity to the power spectrum is calculated for the characteristic quantity, that is, for each category, and the recognition indication representing the reference pattern having the least deviation, that is, the recognition code, is outputted from matching section 14. This pattern matching processing is based on the dynamic programming method in this embodiment. Voice input section 18 and voice recognition section 14 are connected to processor bus 24 of the processing system, and main control section 26, program store 28, work memory 30 and display device 32 are also connected to processor bus 24. Main control section 26 is a processor which supervises and controls this entire device, and timer 34, which will be described later, is also connected to this. Program store 28 is a read-only memory wherein the operational sequences of main control section 26 are stored in a semi-fixed manner. These operational sequences are explained later in detail, referring to the flow chart. These operations are performed based on the operational sequences stored in program store 28. Work memory 30 is a random access memory which functions as the operational memory region for main control section 26. Display device 32 is a display which visually displays the recognition result by voice recognition section 14, the translation result by voice synthesis section 16, various guidance messages for users, and the display data to be read during the initial cataloging mode, which is explained later. In this embodiment, a liquid crystal display device is preferably employed. For example, the results of the recognition by voice recognition section 14 is displayed on display device 32 in the form of written characters, which enables the operator to check the accuracy of the results.

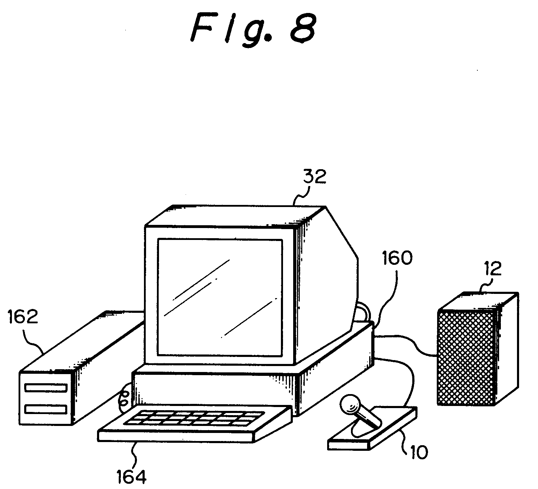

Now then, voice synthesis section 16 is connected to the voice synthesis data memory, that is, translation dictionary 36, via memory control section 46. Voice synthesis data memory 36 in the present embodiment is a read-only memory that is removably connected to memory control section 46 through connector 38, and stores the voice data in a compressed form at the storage locations corresponding to the recognition codes. This is realized in the form of integrated circuit memory card 144 in Figure 7, wherein, for example, a read-only memory semiconductor device is installed, and functions as the translation dictionary. Needless to say, the translation dictionary can be preferably realized in the form of an external memory device, such as a floppy disk. Also, a renewable semiconductor memory device is acceptable, but in this case, it is preferable for its non-volatility to be supported by a backup power in order to protect the memory contents. Alternatively, an electronically erasable/programmable read-only memory (EEPROM) may be used. Memory control section 24 is a functional section for the memory card control section or the disk control section, for example, and is removably connected to the translation dictionary so as to control the interface between the dictionary and voice synthesis section 16.

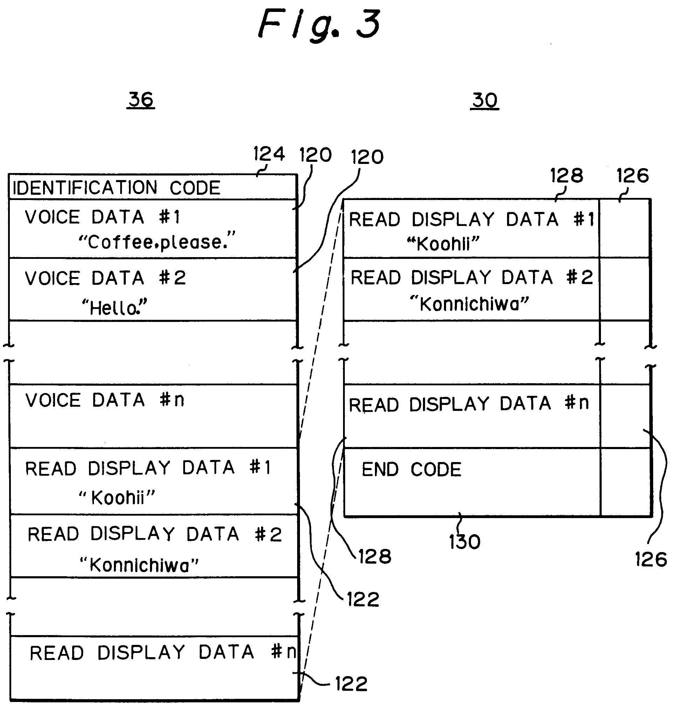

Translation dictionary 36, as is shown in FIG. 3, contains voice data storage region 120, wherein the voice data, for example, of English words, are stored, and read data region 122, wherein the read display data which represent the pronunciations for the Japanese words corresponding to these English words are stored. Needless to say, these words may take the form of a word, phrase and/or sentence. Voice data storage region 120 is established at the higher order address storage location of memory 36, and read data region 122 at the lower address storage location.

Voice data in the present embodiment is stored in a form such that the wave form is encoded in the compressed form by adaptive differential pulse-code modulation (ADPCM). In this case, for example, voice data #1 is voice data representing an English phrase "Coffee please.," and voice data #2 is voice data representing the English word "Hello." Further, read display data #1 is character data representing the Japanese pronunciation "Coohii" for the Japanese word corresponding to voice data #1, and read display data #2 is the Japanese pronunciation "Konnichiwa" for the Japanese word corresponding to voice data #2. Voice data 120 and read display data 122 are stored so that they correspond to each other. This character data in the present embodiment is expressed in the Japan Industrial Standard (JIS) code. In the present embodiment, up to n (integer) number of this voice data and read display data is stored, respectively, for example, up to 64 words or phrases. For example, 16 bytes are assigned for each word, and 64 words occupies approximately one kilobyte of storage region.

Voice data 120 and read display data 122 are made to correspond to each other through the above mentioned recognition codes. More specifically, one of voice data 120 and its corresponding read display data 122 have a common recognition code, and voice recognition section 14 controls the addresses of the storage locations of two storage regions 120 and 122 based on these recognition codes. Also, voice data 120 and read display data 122 may be formatted so that voice data 120 and read display data 122 contain their own recognition codes.

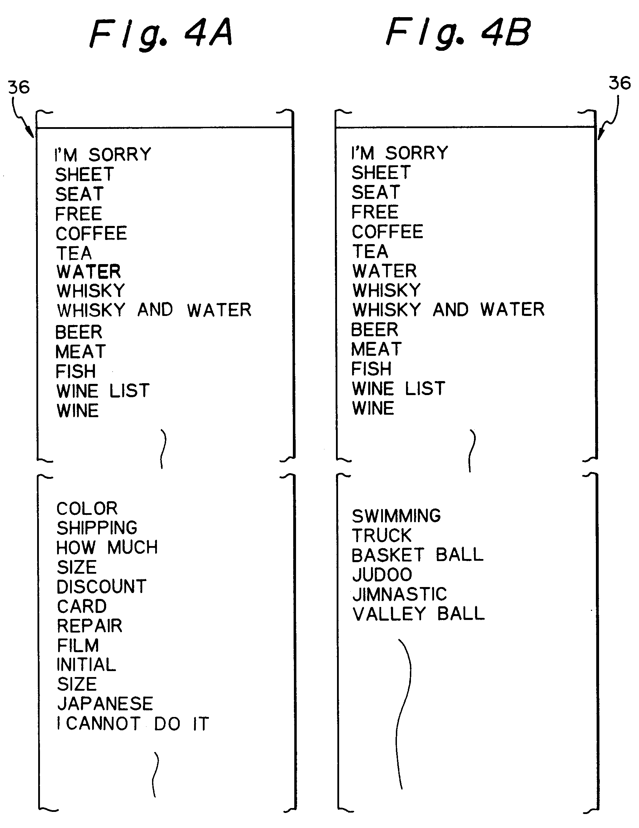

The identification codes representing the types of this memory 36 are stored in specific storage location 124 in memory 36. The memory, that is, translation dictionary 36, is preferably realized in the form of the above mentioned memory card 144, and is separately prepared for various usages, for example, translations from Japanese to English, from Japanese to French, and from Japanese to German, or for general purposes and other purposes, such as business, travelling, sports and doctor to patient communications. The stored vocabularies are sometimes common as is shown in FIGS. 4A and 4B, and at other times, are different. The contents of the stored vocabulary do not hardly need to have differences based on the different languages, but depend on the usages. Those shown in FIGS. 4A and 4B are for general purposes and sports purposes, respectively. As is evident from these examples, generally speaking, common vocabularies are stored in the storage locations with higher order addresses and the vocabularies peculiar to the card are stored at the storage locations with lower order addresses. Further, in the case of the card for general travelling, for example, the contents of the stored vocabularies are the same whether for English or German. The operator inserts the memory card for English in this device if the translation from Japanese to English is required, and the memory card for German if the translation into German is required. In this manner, this device can handle various languages by inserting a memory card 144 for the desired language.

Identification code 124 is an indication showing the classification of these languages and usages, and is stored in the specific memory locations of card 144 in a semi-fixed manner. Identification code 124 consists of eight bits in the present embodiment. Of course, this identification code 124 may be applied to a floppy disk wherein translation dictionary 36 is realized.

Voice synthesis section 16 has the function of searching this translation dictionary 36 based on the recognition codes outputted from voice recognition section 14, extracting corresponding voice data 120, and synthesizes this data. In the application example in which voice data 120 is encoded in ADPCM, voice recognition section 14 decodes voice data 120 in ADPCM to synthesize the voice and output this to voice output section 40. Voice output section 40 has a digital/analog converter, which converts this decoded voice data to corresponding analog signals and outputs them to amplifier 42. Amplifier 42 is an output amplifier which amplifies its power and outputs it as voice through speaker 12. The voice synthesis is performed in this manner. The translating function is realized by storing in memory 36 the voice data for the language which is different from that for the language to be inputted. In the case of an application example in which the words resulting from the translation are outputted in the form of written characters, translation dictionary 36 contains, in place of or in addition to voice data 120, the character data representing the words resulting from the translation, at the memory locations corresponding to the recognition codes. This character data is displayed on display device 32 as written characters. Additionally, in the case of an application example in which this device is applied to a voice dial telephone or an automobile with voice control functions, translation dictionary 36 stores, in place of or in addition to voice data 120, the external equipment control commands corresponding to the results of translation, at the memory locations corresponding to the recognition codes. These commands are transferred to the corresponding input/output port to control the relevant external equipment. For example, in the case of an application example in which this device is applied to a voice-recognizing word processor, it may be designed so that the character lines corresponding to the recognition codes are formed to be outputted by a display device and/or a printer.

Main control section 26 employs work memory 30, following the control sequences stored in program store 28, to control each of the functional sections of this device. Main control section 26 in the present embodiment contains code register 58 for storing the above mentioned recognition codes. This relationship is explained later. This code register 58 may be provided outside of main control section 26. For example, it may be installed in voice synthesis section 16 or other memories such as work memory 30.

Work memory 30 is an operational region for temporarily storing the data to be processed by main control section 26. It accepts the above mentioned identification code 124 from memory card 144 to hold it temporarily, and is also used as the storage region for catalog flag 126 shown in FIG. 3, which is explained later. Therefore, in the present embodiment, work memory 32 is supported by a backup power source so that its storage contents are protected even when the power source of this device is removed. In addition, storage region 128, wherein the read display data 122 read from translation dictionary 36 is stored, is also secured in work memory 30.

Operation switch 44 is connected to interrupt terminal 60 of main control section 26. Operation switch 44 in the present embodiment is a non-locking push-button switch, which can accept three different instructions depending on how it is pressed down. Alternatively, operation switch 44 may be a slide switch with three different connecting positions which can be selected by the horizontal movement of the switch. Further, a switch may be provided for each of three different operational instructions. In order to minimize power consumption, the power supply is designed to coordinate with operation switch 44.

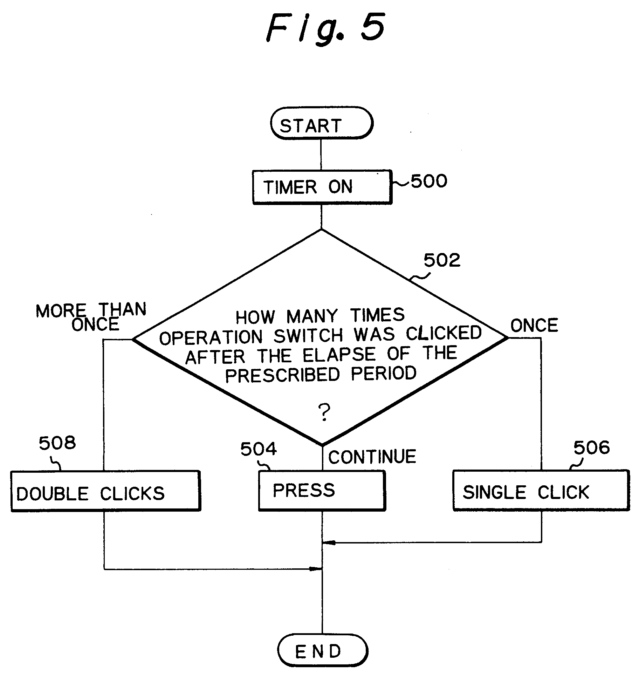

Timer 34 is connected to another interrupt terminal 62 of main control section 26, and this is a clocking circuit for clocking how long operation switch 44 is held down. For example, referring to FIG. 5, this timer 34 is activated at the time when the recognition result from the above mentioned voice recognition section 14 is displayed on display device 32, and begins clocking for a prescribed duration, for example, 400 milliseconds (step 500). Main control section 26 watches, based on timer 34, how long switch 44 has been held down and determines how the switch has been pressed. For example, if switch 44 is held down for this prescribed duration (step 502), main control section interprets this operation as "press" (step 504). If switch 44 is pressed once, main control section 26 interprets this operation as "single click" (step 506), and if switch 44 is pressed down twice or more within the prescribed duration, for less than the prescribed duration, main control section 26 interprets this operation as "double clicks" (step 508). In other words, operation switch 44 is a timer switch realized by the program sequence. It is explained later how main control section 26 utilizes these various ways of pressing down the switch.

Referring to FIG. 1, mode selector switch 48 is connected to the other interrupt terminals 64 and 66 of main control section 26. Mode selector switch 48 is a switch with three positions as is illustrated, by which one of three operating modes of this device, that is, the off mode, cataloging mode and operation mode, are selected. In the off mode, connecting position 50 is selected, causing main control section 26 to stop sending power to each section of the present device as a response to this selection. In the cataloging mode, connecting position 52 is selected, and this connecting position 52 is connected to interrupt terminal 64, causing main control section 26 to shift to the cataloging mode in response to this selection. The cataloging mode is an operation mode for initially cataloging the vocal pattern of the user as the reference pattern in voice recognition dictionary 22, and is explained later in detail. In the operation mode, connecting position 54 is selected, and this connecting position 54 is connected to interrupt terminal 66, causing main control section 26 to shift to the operation mode in response to this selection. The operation mode is an operating mode in which the present device performs the translation procedure, based on the voice recognition and voice synthesis, which is also explained later in detail, in conjunction with the operation of main control section 26. As is illustrated, these interrupt terminals 60, 62, 64 and 66 are connected to power source voltage +V, and switches 44 and 48 are grounded on their opposite sides to the interrupt terminals.

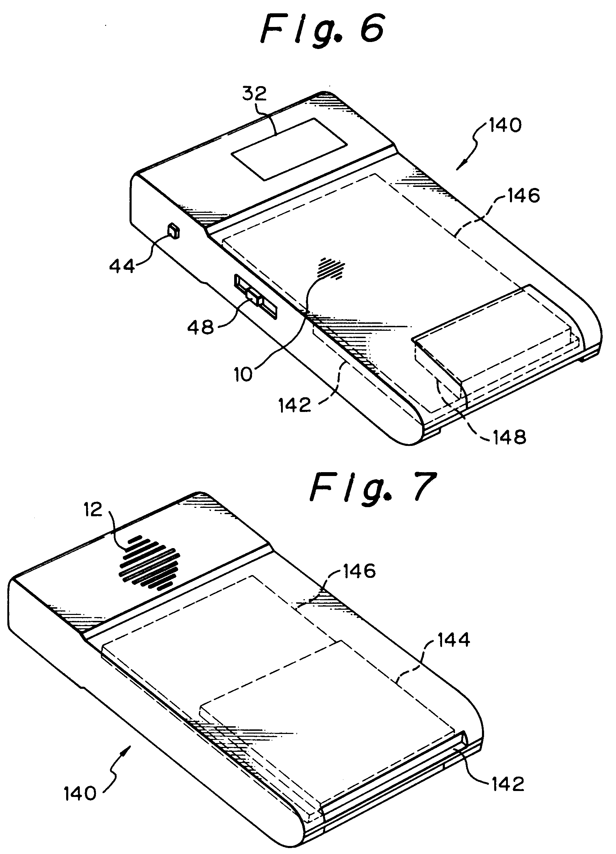

Referring to FIGS. 6 and 7, the translation device of the present embodiment is mounted in portable compact housing 140, as is shown in the figure, and is configured so that Japanese words, for example, are vocally inputted through microphone 10 and the corresponding foreign language words, such as English words, are vocally produced through loud speaker 12. In the figures, similar components or structural elements are designated by like reference numerals and redundant descriptions will be avoided for simplicity. As is evident from the same figure, housing 140 generally forms a portable size cuboid, which is provided with display device 32 and microphone 10 on one of its main surfaces and operation switch 44 and mode selector switch 48 on one of its side surfaces. Further, speaker 12 is provided on the main surface on the opposite side, and receptacle slot 142 is formed on one of the short side surface as shown in FIG. 7, through which memory card 144 is inserted. Memory card 144 is loaded with translation dictionary 36 in the form of a read-only-memory integrated circuit. The electronics is mounted on electronic circuit board 146, and when card 144 is inserted, it is connected to board 146 through connector 38, as shown in FIG. 1. As shown in FIG. 6, power source 148 is mounted in the present device, and this is the power source, such as a battery, for supplying power to each section of the present device.

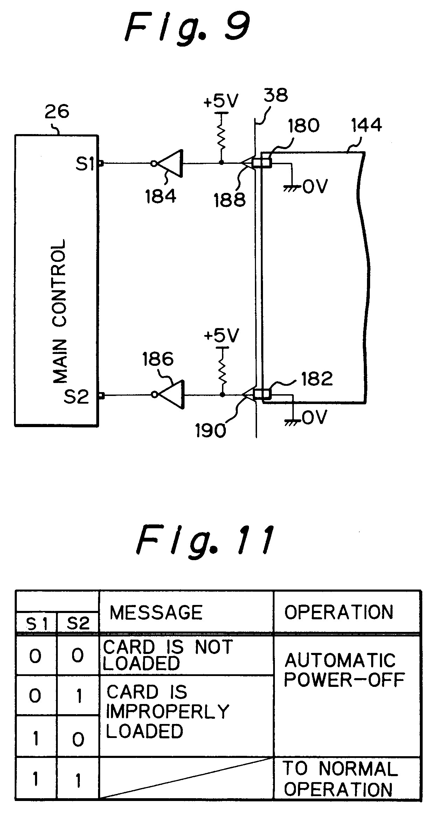

The application examples shown in FIGS. 6 and 7 contain a circuit for checking whether memory card 144 is properly connected to connector 38 shown in FIG. 1. Memory card 144, as shown in FIG. 9, has reference potential terminals at its connecting sections, for example, earth terminals 180 and 182 in this example. On the other hand, main control section 26 has terminals S1 and S2 for checking if memory card 144 is properly connected, and these are connected to connector terminals 188 and 190 of connector 38 through buffer amplifiers 184 and 186. The respective input terminals 188 and 190 of buffer amplifier 186 and 190 are pulled up to a high level. Therefore, if memory card 144 is connected through connector 38 to data bus 56 shown in FIG. 1 of memory control section 46, earth terminals 180 and 182 are connected to main control section 26, and the input of buffer amplifiers 184 and 186 comes down to the earth level. In response to this, buffer amplifiers 184 and 186 supply the high level to terminals S1 and S2 of main control section 26. Main control section 26 determines, based on the high level of terminals S1 and S2, whether memory card 144 is properly connected.

FIG. 8 shows an example of the embodiment of the translation device as a desk top processing system. In this application example, the electronics shown in FIG. 1 is placed in housing 160. Translation dictionary 36 is realized in the form of a floppy disk, and its drive device 162 is connected to housing 160. In the present embodiment, the functions of operation switch 44 and mode selection switch 48 are realized by keyboard 164. This keyboard 164 is connected to system bus 24 as is indicated by the dotted line in FIG. 1. In order to realize these manual input functions, a mouse, not shown, may be connected in addition to, or in place of, keyboard 164.

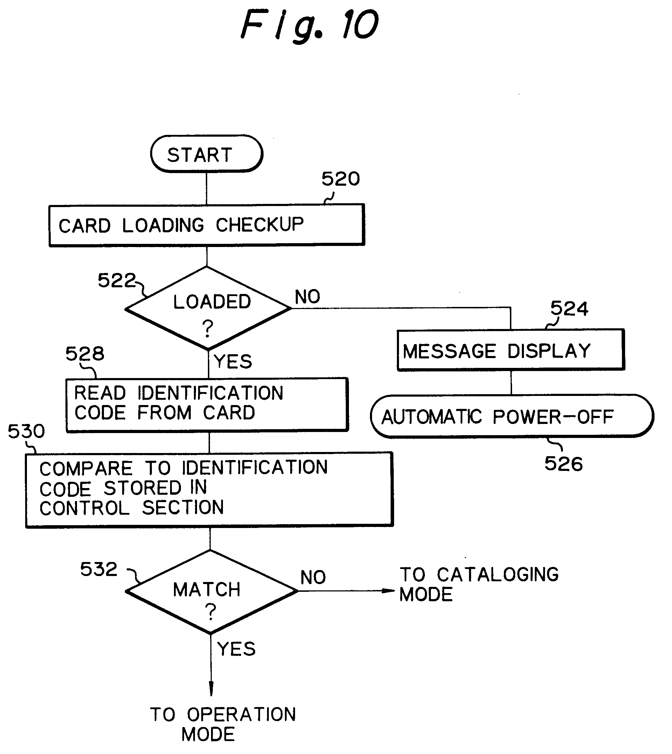

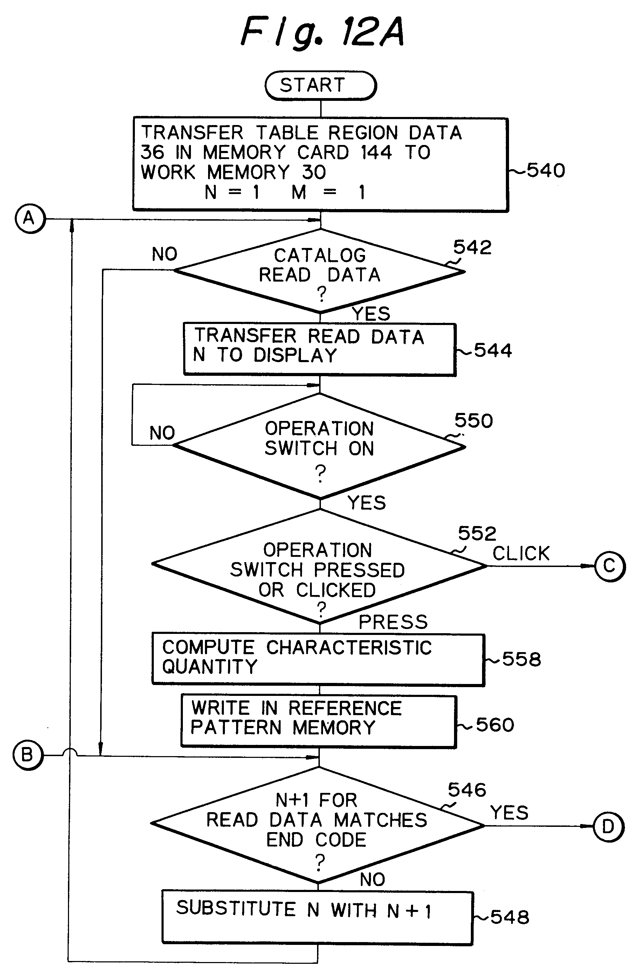

Below, application examples of the portable type devices shown in FIGS. 6 and 7 are explained. In operation, when a power switch, not shown, is operated to supply power to the present device, main control section 26 determines whether memory card 144 has been inserted (steps 520 and 522 shown in FIG. 10). In order to determine whether memory card 144 has been inserted, the signal logic of S1 and S2 shown in FIG. 11 is followed. Since memory card 144 has not been loaded if both signals S1 and S2 are at a logic "0," main control section 26 displays a message indicating this condition on display device 32 (step 524) and controls power source 148 shown in FIG. 7 to stop supplying power to the circuits within the device (step 526). If both signals S1 and S2 are at a logic "1," meaning that memory card 144 has been properly loaded, main control section 26 moves to the next step 528, following the normal sequence. Also, when either one of signals S1 or S2 is in the remaining logic state, since memory card 144 has not been properly loaded, main control section 26 advances to step 524 and step 526.

In normal step 528, main control section 26 reads identification code 124 from memory card 144, and compares this to identification code 124 retained in work memory 30 (step 530), and if both codes match (step 532), this means that the same memory card as memory card 124 used in the previous operation has been inserted, and therefore, there is no reason for its contents to be different, and as a result, the control moves to the operation mode in the present embodiment. If both do not match in step 532, this means that a memory card different from memory card 124 used in the previous operation has been loaded, and as a result, the control moves to the cataloging mode in the present embodiment. In this case, main control section 26 in the present embodiment displays a message "This is a different card" on display device 32. At the same time, identification code 124 which was read from memory card 144 is established in work memory 30 as the fresh identification code.

There are the following benefits in checking the match between identification code 124 retained in memory 30 and the newly read identification code. If it is configured so that main control section 26 and memory card 144 do not use identification code 124, the user would have to perform the initial cataloging operation each time memory card 144 is loaded into the device according to read data 120. Alternatively, if read data 122 had been already written in voice recognition 22 by the time the operation mode began, a check would have to be made as to whether all of this data matches read data 122 contained in the freshly loaded memory card 144. For example, assuming that approximately one millisecond is required per one read data 122 to read out read data 122 from memory card 144 and compare this to the read data retained in voice recognition dictionary 22, it may end up taking approximately one second to check the match for all 64 of the read data 122 contained in memory card 144. In other words, even if mode selector switch 48 is operated to select the operation mode, it may be impossible to use the device for approximately one second. However, since main control section 26 is configured to read the above mentioned identification code 124 and check the match, the operation mode actually begins to function in an extremely short time compared to the above mentioned one second.

In the present embodiment, main control section 26, which is activated as soon as power begins to be supplied, is configured to check first whether card 144 has been actually inserted, and next, to check identification code 124 and move to the operation mode or the cataloging mode, depending on the result. However, main control section 26 may be configured to read the state of mode selector switch 48 when it becomes activated as soon as power begins to be supplied or when memory card 144 has been actually loaded, and moves to the mode indicated by switch 48.

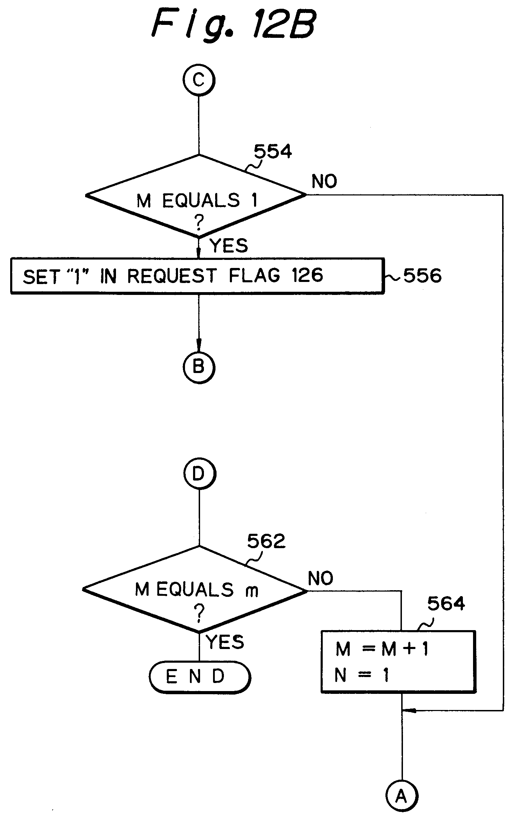

Incidentally, in the present embodiment, as is shown in FIG. 3, one bit cataloging request flag 126 is established in work memory 30 to show whether the initial cataloging of the reference patterns, that is, read data 122, is required in voice recognition dictionary 22. This flag 126 may be configured to indicate preferably no request for cataloging. In the present embodiment, it is configured so that a logic "1" is set in flag 126 when the initial cataloging is not required, meaning that a logic "0" is the request for the cataloging. Referring to FIGS. 12A and 12B, in the cataloging mode, main control section 26 first reads the table region of memory card 144 into work memory 30 (step 540). At this time, the values in counter N, which shows the number of cataloged words, and counter M, which shows the number of catalogings, are set to "1." Read data #1 to #n are stored in work memory 30 by this reading, as is shown in FIG. 3. End code 130 having a specific value is formed after the last read data #n. End code 130 is a specific value showing that read data 128 is not present in the memory locations after this code.

Here, main control section 26 checks cataloging request flag 126 in work memory 30 corresponding to counter N (step 542). Since the initial cataloging of data N corresponding to counter N is necessary if the significant logic value "1" is not set in flag 126, normal step 544 for the initial cataloging is taken. When a fresh memory card 144 is insert in the device, in other words, when a mismatch occurs between the above mentioned identification codes 124, it becomes necessary to perform the initial cataloging operation for all words and phrases retained in translation dictionary 36. If a significant logic value "1" is set in flag 126, meaning that the initial cataloging is unnecessary for read data N, the initial cataloging is not performed. In the latter case, main control section 26 moves to step 546, wherein the contents at the memory location in work memory 30 corresponding to the incremented value of counter N is read and checked if this contents is end code 130. If it is not end code 130, the main control section 26 takes step 548 to incrementing counter N and returns to step 542.

In step 542, if initial cataloging request flag 126 corresponding to counter N indicates "request for cataloging," main control section 26 advances to normal step 544 for the initial cataloging, wherein corresponding read data #N is read from work memory 30 and transferred to display device 32. For example, in the case of read data #1, the Japanese word "Koohii," meaning "Coffee," is visually displayed. At this timed main control section 26 may display a guidance message "Hassei shite kudasai," meaning "Please pronounce it," on display device 32. Here, the user visually recognizes the read data displayed on display device 32 and pronounces the Japanese word into microphone 10 while holding operation switch 44 in the "press" state if the user wants to perform the initial cataloging of voice data 120 for this read data. If initial cataloging is unnecessary, operation switch 44 is "clicked." Here, the main control section judges how the operation switch is pressed (steps 550 and 552), and if it detects a "click," it determines that the cataloging of voice data for read data 120 is unnecessary and moves to step 554, skipping ultimately to the next read data 120. In step 554, the value in counter M is checked and if this value is count "1," "1" is set in initial cataloging request flag 126 (step 556), meaning that the initial cataloging is unnecessary for the word. If the value in counter M is not "1," main control section 26 returns to step 542, wherein the initial cataloging request flag 126 is checked.

In step 552, if operation switch 44 is in "press" state, characteristic quantity extraction computation 554 is performed for the voice signal inputted through microphone 10 at this time. For example, if the value in counter N is "1," the corresponding Japanese word "Koohii," meaning "Coffee," is read from work memory 30 as read data #1 and visually displayed on display device 32. Here, the user pronounces the Japanese word "Koohii" into microphone 10 while holding operation switch 44 in the "press" state. Operation switch 44 is released when its vocalization is over. In response to this, main control section 26 makes voice recognition section 14 performs characteristic quantity computation 554 for the voice signal "Koohii." This computation may be the same as in the voice recognition in the operation mode, and will be explained later in detail in relation to the operation mode. Main control section 26 performs characteristic quantity extraction computation 554 to extract the characteristic quantity of the voice signal "Koohii," and stores this as the reference pattern in voice data 120 corresponding to counter N in work memory 30, which is voice data #1 in this example (step 560). Afterward, the control moves to step 546. In this example, it checks cataloging request flag 126 for the second read data "Konnichiwa," meaning "Hello," and performs the initial cataloging procedure.

In the above mentioned manner, main control section 26 catalogs voice data 120 for read data 122 which requires the initial cataloging, while it checks cataloging request flag 126 sequentially from read data #1 to #n. If end code 130 is detected as counter N advances to a value of n, main control section 26 checks the count in counter M (step 562), and ends the initial cataloging mode if this is equal to the end value "m." If the count in counter M has not reached the end value "m," the control increments counter M (step 564) and goes back to step 542. In the present embodiment, since the end value "m" is set at "3," the reference pattern cataloging procedure is performed three times for read data #1 to #n. Ultimately, the most appropriate value for m times of the reference pattern data, for example, an average value, is cataloged in work memory 30.

In the present embodiment, the cataloging can be skipped for the read data which does not require cataloging during the initial cataloging of the reference patterns for voice recognition. More specifically, during the initial cataloging of the reference patterns, the vocalizations of n number of words and phrases contained in translation dictionary 36 can be cataloged. The vocalization can be inputted m times. When the vocalization is inputted for the first time, read display data 122 for n number of words and phrases is sequentially displayed on display device 32. At this time, if the user finds a word or phrase for which the user does not require the cataloging of its vocalization, the user clicks operation switch 44, setting cataloging request flag 126 to "1," which enables this word or phrase to be skipped when read data 122 is displayed on display device 32 for the vocalization cataloging for the second time and after. Therefore, "a complex operation such that the user must catalog the reference patterns for all read data contained in translation dictionary 36, by vocalizing the words or phrases while holding down operation switch 44," is not necessary.

When counters N and M reach the end values during the initial cataloging procedure performed in this manner, the control moves to the operation mode. Needless to say, it may be configured so that main control section 26 checks the state of mode selector switch 48, and moves to the operation mode if this is set at the operation mode position.

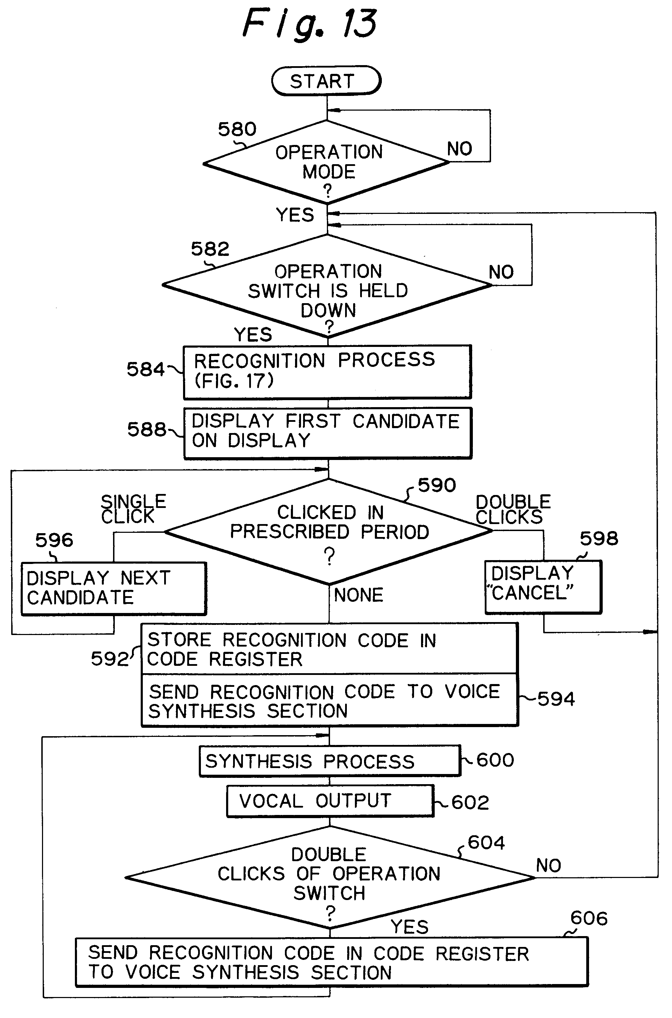

Referring to FIG. 13, if the operation mode is selected by mode selector switch 48 (step 580), main control section 26 controls voice input section 18 so as to be in the enable state. Here, voice input section 18 checks the state of operation switch 44 (step 582). If the user wants to input the voice through microphone 10, the user holds operation switch down while the voice is being inputted, in other words, keeps it in "press" state. If this switch 44 is held down, this device waits for the voice input from microphone 10 and proceeds to recognition processing 584.

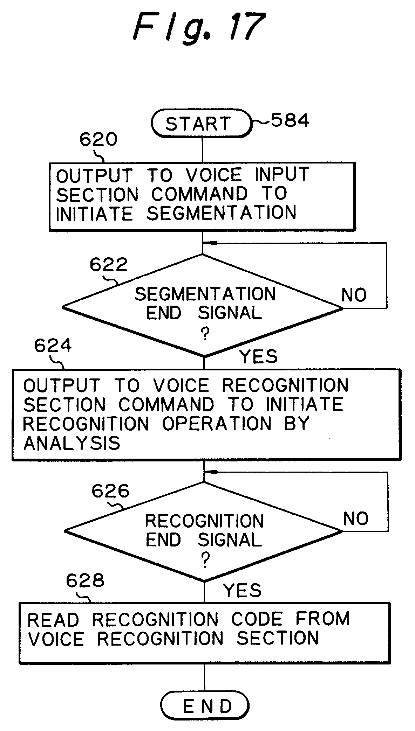

Referring to FIG. 17, main control section 26 moves to recognition process routine 584 in response to the "press" state of operation switch 44. Main control section 26 detects an interruption as switch 44 is pressed down, and instructs voice input section 18 to create voice segments by issuing a voice segmentation start command (step 620). Voice input section 18 waits for the voice input through microphone 10 in response to this command. When the voice comes in through microphone 10, amplifier 100 shown in FIG. 2 amplifies this analog voice signal, and its output is limited by low-pass filter 102 and converted by analog/digital converter 104 into the corresponding digital data. This digital data is frequency-analyzed by band-pass filter 106 and converted to the power spectrum. This power spectrum data is inputted to voice segment detector 108 to detect the beginning and end of the power of the voice segment, thus detecting the voice segments. The power spectrum data satisfying the voice segmentation condition in this manner is outputted, by units of voice segment, to voice recognition section 14 through output 20. At this time, voice input section 18 outputs a signal to main control section 26, indicating the completion of voice segmentation (step 622).

In voice recognition section 14, the digital data of input 20 is inputted to matching section 110, and in matching section 110, the power spectrum of this voice segment is analyzed by linear predictive coding analysis to extract its characteristic quantity. This characteristic quantity data is temporarily stored in memory 112. Incidentally, in the case of the above mentioned cataloging mode, the power spectrum pattern for the characteristic quantity recognized in this manner is stored at memory locations for the corresponding words in recognition dictionary 22.

Responding to the voice segmentation completion signal arriving from voice input section 18, main control section 26 issues to voice recognition section 14 a command to initiate the recognition operation based on analysis (step 624). Here, matching section 110 of voice recognition section 14 reads the characteristic quantity data from memory 112 and compares the power spectrum of the characteristic quantity to the reference pattern in recognition dictionary 22, following dynamic programming method. Matching section 110 selects the reference patterns in the order of closer resemblance to the power spectrum, holds the recognition codes representing the selected reference patterns, and sends the recognition completion signal to main control section 26 (step 626).

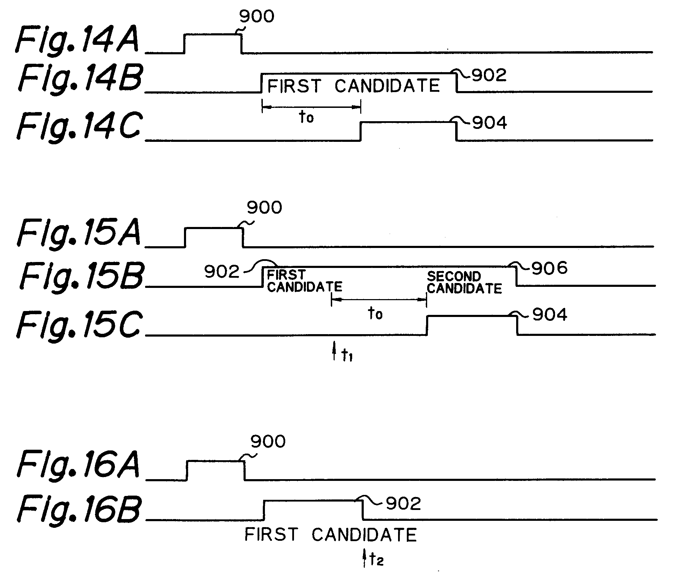

Main control section 26 reads the recognition codes from voice recognition section 14 in response to the recognition completion signal (step 628). Responding to this, matching section 110 first outputs the recognition code for the reference pattern having the closest resemblance as the first order candidate. Here, returning to FIG. 13, main control section 26 reads the words corresponding to this recognition code from read display data region 128 in work memory 30 and visually displays this on display device 32 (step 588). The period when this first order candidate is being displayed is shown as wave form 902 in FIG. 14B. If the user vocally inputs a Japanese word, for example, "Koohii," a Japanese word "Koohii" is displayed on display device 32. Simultaneously, main control section 26 starts timer 34, which in turn begins clocking for a prescribed duration t0 in FIG. 14B. Incidentally, the device may be configured so that the Japanese word is vocally outputted through speaker 12 in addition to, or in place of, visually displaying the recognized Japanese word on display device 32. As is evident from the above explanation, in the present embodiment, the voice input through microphone 10 is accepted as the effective input in voice recognition section 14 only when operation switch 44 is held in the "press" state. The period when this voice is being inputted is shown as wave form 900 in FIG. 14A. Therefore, the device is configured to minimize the effect wherein voices from the area around the device are unexpectedly inputted and unintended results are outputted. For example, even if the voice of the person whom the user desires to talk to is loud, microphone 10 does not need to be moved away from the person because the voice can be inputted only when operation switch 44 is held in "press" state.

The user is to recognize visually the display, for example, "Koohii," on display device 32, and if this display is correct, nothing needs to be done. If the display on display device 32 is different from the intended one, the user is to click operation switch 44. In this case, if the user wants the next candidate words, the user performs a "single click." Further, if the user wants to stop the voice synthesis, in other words, if the user wants to cancel the procedure, the user performs "double clicks." Incidentally, non-locking type switches may be independently provided for each of the three different operating instructions in place of the single operation switch as was described above. For example, they can be a key to be held while the voice is being inputted through microphone 10, a key to input the command for moving to the next candidate word following the recognized one, and a key to give the command for stop the voice synthesis.

When prescribed duration t0, which is one second in the present embodiment, elapses (step 590), timer 34 outputs a signal to main control section 26. In response to this signal, main control section 26 determines whether this first candidate is satisfactory under the condition that the operation switch has not been operated up to the moment, and stores its recognition code in code register 58 (step 592). In the case of this example, the recognition code for the Japanese word "Koohii" is stored in code register 58. Simultaneously, main control section 26 transfers this recognition code to voice synthesis section 16 (step 594). As is shown above, in the present embodiment, if the result of recognition matches the user's intention, the user has only to wait for the timing management by timer 34, and does not need to operate the key for each confirmation. Therefore, the present embodiment can minimize the operational complexity.

In step 590, if main control section 26 detects a "single click" of operation switch 44 before the signal indicating the elapse of the prescribed duration t0 has arrived from timer 34, for example, at the time t1 in FIG. 15C, it controls voice recognition section 14 so as to output the recognition code for the next order candidate word from voice recognition section 14. This second candidate word is visually displayed on display device 32 in the same manner as above (step 596). The period when this second candidate is being displayed is shown as wave form 906 in FIG. 15B. Here, the control goes back to step 596, wherein the user operates operation switch 44 in the same manner as described above. In step 590, if main control section 26 detects "double clicks" of operation switch 44 before the signal indicating the elapse of the prescribed duration t0 has arrived from timer 34, for example, at the time t2 in FIG. 16B, it makes display device 32 display "cancel" (step 594), and the control returns to step 582.

When voice synthesis section 14 receives the recognition code, it searches translation dictionary 36 through memory control section 46, based on this code, and reads the voice data from the memory locations in voice storage region 120 having the address corresponding to the recognition code. In this example, voice data #1, that is, "Coffee, please," is read. In the present embodiment, since voice data 120 has been encoded in ADPCM, voice recognition section 14 decodes voice data 120 in ADPCM code to synthesize the voice (step 600), and outputs this voice through voice output section 40 (step 602). This decoded voice data is converted in voice output section 40 into a corresponding analog signal by the digital/analog converter, to be fed into amplifier 42. Amplifier 42 amplifies its power to output it as the voice through speaker 12. The voice synthesis is performed in this manner, in other words, the English voice "Coffee, please" is outputted from speaker 12 in the case of this example. The period when this synthetic voice is being outputted is shown as wave form 904 in FIG. 14C. If the user wants to output this voice "Coffee, please" again, the user is to perform "double clicks" of operation switch 44. Main control section 26 moves to step 606 when it detects "double clicks," wherein the recognition code held in code register 58 is read again and transferred to voice synthesis section 16 in the same manner as the above. The procedure subsequent to this is the same as the above, by which the same voice, "Coffee, please" in this case, is again outputted from speaker 12. As is evident from the above example, in the present embodiment, since code register 58 which holds the recognition code is provided, the user has only to operate operation switch 44 if the user wants to output the same voice again. Therefore, it is unnecessary to repeatedly input the same voice through microphone 10. This not only improves the operating efficiency of the device, but also shortens the time it takes to output the voice.

In step 604, if a prescribed duration elapses without the detection of the operation of operation switch 44, main control section 26 returns the control to step 582, wherein it waits for the next "press" state input from operation switch 44. Here, if the user wishes to freshly input a different voice, the user inputs this voice through microphone 10 by holding operation switch 44 in the "press" state. The subsequent procedure is the same as in the above. In this case, the recognition code for the word recognized by voice recognition section 14 is written over the previous recognition code held in code register 58 of main control section 26, and the operation is performed based on this new recognition code.

As is evident from the above explanation, in the present embodiment, translation dictionary 35 is realized in the form of exchangeable external memories, such as memory card 144 or a floppy disk. Therefore, dedicated memory cards 144 or floppy disks can be prepared according to the language types into which the translation is made, and the vocabulary types for the fields of application and the usage, respectively. The user can select, for example, a memory card 144 suitable for the purpose of the use of this device and insert it in this device. For example, even if a Japanese word "Konnichiwa" is vocally inputted, "Good morning" is outputted if memory card 144 for the English language has been selected, "Bon jour" for French, and "Guten Tag" is outputted if it has been selected for the German language. As is shown above, in the present embodiment, the exchangeable external memory mediums prepared for each of various usages are selectively used instead of storing an enormous amount of translation dictionary data in a single memory medium, thus preventing the translation dictionary from becoming excessively large.

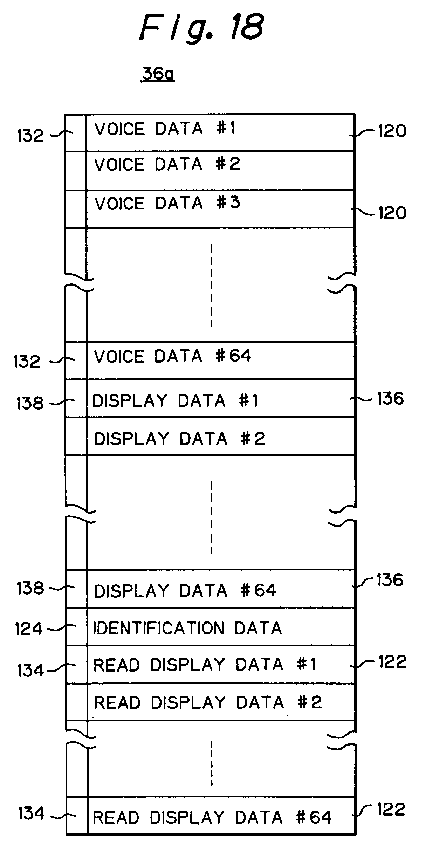

FIG. 18 shows a different embodiment of translation dictionary 36. Recognition codes 312 and 134 are contained in this translation dictionary 36a, corresponding to voice data 120 and read display data 122, respectively. Further, the display data corresponding to the respective items of voice data 120 is stored with recognition code 138 at the corresponding memory location in memory region 136. Display data 136 contains the written characters representing corresponding voice data 120. If voice data 120 is an English word, for example, the written characters spelling this English word are stored with corresponding recognition code 138.

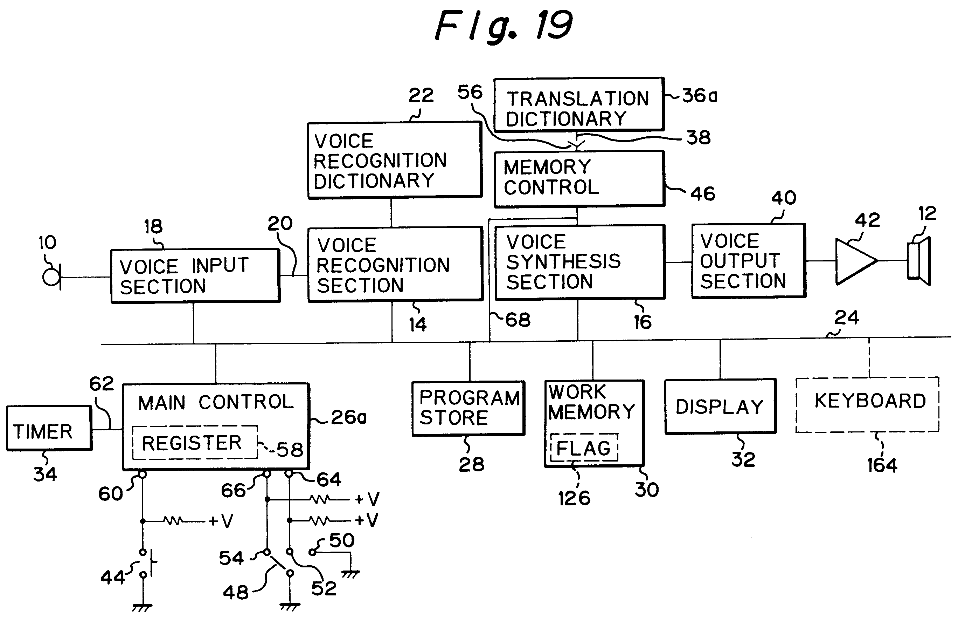

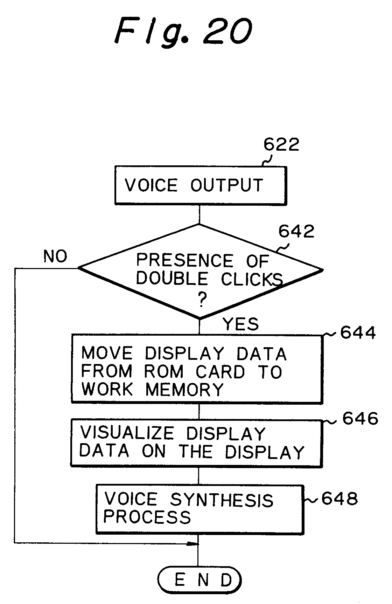

The translation device employing translation dictionary 36a shown in FIG. 18 is shown in FIG. 19. The hardware configuration of the translation device shown in the figure may be basically the same as the one shown in FIG. 1, but is different in that memory control section 46 is also connected to bus 24 via connecting wire 68. Main control section 26a is configured to follow the operational flow shown in FIG. 20, and is different in that the operational sequences for following this flow is stored in program store 28. In the present embodiment, in the cataloging mode, main control section 26a writes the entire data of translation dictionary 36a into work memory 30 in response to the mismatch of the above mentioned identification code 124. Here, needless to say, recognition codes 132, 134 and 138 are also written in. Further, in the cataloging mode, when the reference pattern is cataloged in recognition dictionary 22, main control section 26a adds recognition code 134, which corresponds to read display data 122, to the reference pattern, and stores them in recognition dictionary 22.

In the operation mode, voice recognition section 14 outputs, to bus 24, the recognition code of the reference pattern for the candidate obtained by searching recognition dictionary 22, after voice recognition. Main control section 26a compares this recognition code to recognition code 134 held in work memory 30, and transfers the matching read display data 122 to display section 32 to display it visually. Further, voice synthesis procedure 640 in FIG. 20 is also performed using this recognition code. When voice synthesis section 16 receives the recognition code from main control section 26a, it searches translation dictionary 36 based on this recognition code and outputs, to voice output section 40, voice data 120 having the recognition code 132 which matches this recognition code. Thus, voice data 120 is outputted through speaker 12 in a vocal form. In the above mentioned example, "Coffee, please," for example, is outputted. The operation up to this point is the same as the operation up to step 602 explained previously by referring to FIG. 13.

Referring to FIG. 20, if the user again wants to output the voice outputted through speaker 12 after the voice output step 602 mentioned above, the user performs "double clicks" of operation switch 44 (step 642). For example, when the listener could not accurately hear the word, switch 44 is to be clicked twice after the completion of the voice output from speaker 12. In response to this, main control section 26a transfers the recognition code held in recognition code register 58 to memory control section 46 through bus 24. This recognition code is transferred from memory control section 46 to translation dictionary 36, and display data 136 having recognition code 138, which matches this recognition code, is read out from translation dictionary 36. Memory control section 46 outputs this display data 136 to bus 24, and main control section 26a stores this in work memory 30 (step 644).

This display data temporarily stored in work memory 30 is read by display section 32 under the control of main control section 26a to be visually displayed on display section 32 (step 646). Thus, for example, a line of English characters which represents the voice to be synthesized by the voice synthesis step (640) and outputted through speaker 12 is visually displayed on display device 32. When memory control section 46 reads display data 136 in step 644, it also reads voice data 120 having recognition code 132 which matches its recognition code, and outputs this to voice synthesis section 16. Voice synthesis section 16 vocally outputs this voice data 120 through speaker 12 in the same manner as in routine 640 (step 648). In the above mentioned case, "Coffee, please" is outputted. Incidentally, if the "double clicks" do not occur in step 642, the process shown in FIG. 20 ends.

As is presented above, in the present embodiment, identification code 126 identifying its category is stored in translation dictionary 36a and compared to the identification code held previously in work memory 30, so as to check whether the contents of the reference pattern stored in voice recognition dictionary 22 matches the contents of translation dictionary 36a. Further, display data 136 representing the character lines which correspond to voice data 120 is also stored in translation dictionary 36a, along with recognition code 138, and this can be displayed on display section 32 by operating operation switch 44. That is, the visual display by display device 32 can be obtained simultaneously with the voice output from speaker 12. This visual display is advantageous in that it enhances the vocal communication.

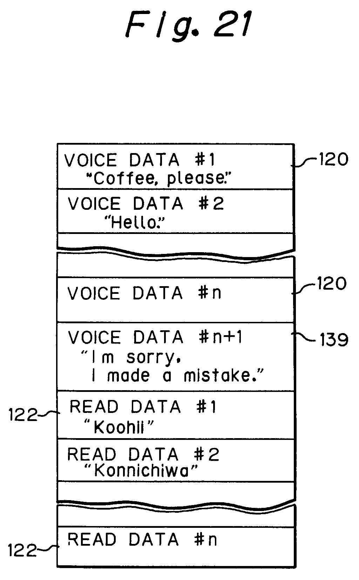

FIG. 21 shows a different embodiment of translation dictionary 36. This translation dictionary 36b is different from translation dictionary 36 shown in FIG. 3, in that it contains an additional voice data 139, in addition to plural (n) voice data 120. This additional voice data memory region 139 stores the voice data for frequently used common sentences. In the case of the present embodiment, this common sentence is an English sentence "I'm sorry, I made a mistake."

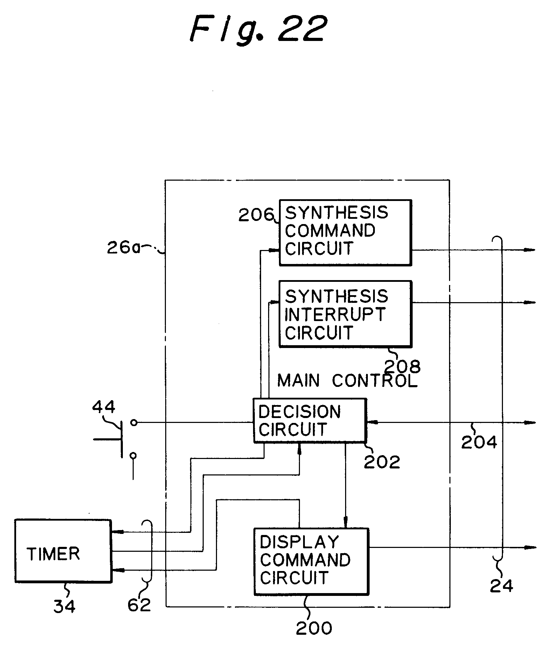

The translation device employing translation dictionary 36b shown in FIG. 21 may basically have the same hardware configuration as the one in FIG. 1, but is different in that main control section 26a is configured to follow the operational flow shown in FIG. 20 in the manner as is partially shown in FIG. 22, and the operational sequences for following the flow is stored in program store 28.

Referring to FIG. 22, in the present embodiment, main control section 26a has display command circuit 200, and a command to display read display data 122 on display section 32 is outputted from this circuit 200 to bus 24. Main control section 26a has decision circuit 202, which determines how operation switch 44 is activated or deactivated, checks the clocking operation of timer 34, and supervises the operational condition of voice synthesis section 16. Signal 204 showing the state of voice synthesis section 16 is given by voice synthesis section 16 through bus 24. Main control section 26a also has synthesis command circuit 206, and this circuit 206 is a circuit for the purpose of supplying a command to voice synthesis section 16 to synthesize the voice based on voice data 139 of the common sentences stored in translation dictionary 36b. Further, main control section 26a has synthesis interruption command circuit 208, and this circuit 208 has a function of giving voice synthesis section 16 a command for interrupting the voice synthesis being performed by voice synthesis section 16. These circuits 200, 202, 206 and 208 are connected to bus 24.

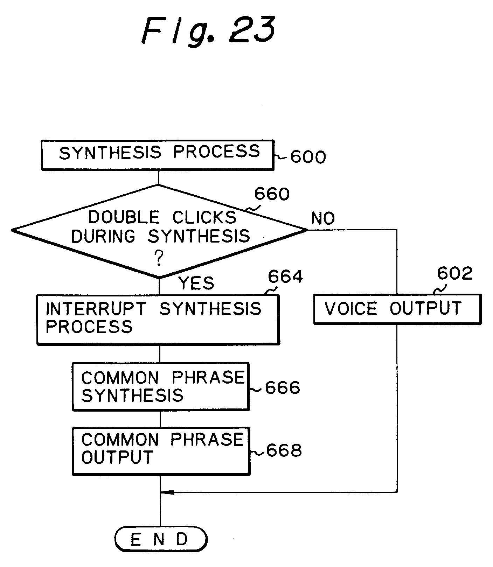

In the operation mode, such voice synthesis 600 and voice output 602 are also performed in the present embodiment in the manner as was previously described by referring to FIG. 13. Referring to FIG.23, if the user wishes to interrupt the voice which has been synthesized in voice synthesis 600 and is being played through speaker 12, for example, if an unintended voice is outputted, the user is to perform "double clicks" of operation switch 44 (step 660). Without "double clicks," the control continues voice output 662, completing it, and returns to detection 582 to detect the next "press" of operation switch 44, for example, in the above mentioned case.

In step 660, if decision circuit 202 detects "double clicks" of operation switch 44, decision circuit 202, in response to this, confirms status signal 204 from voice synthesis section 16. If status signal 204 shows that voice synthesis section 16 is operating, it commands voice synthesis section 16 to interrupt the voice synthesis operation via synthesis interrupt command circuit 208 (step 664). Simultaneous to this, decision circuit 202 issues a command to voice synthesis section 16 through synthesis command circuit 206 to synthesize the voice, based on voice data 139 of the common sentences stored in translation dictionary 36b. In response to the command from synthesis interrupt command circuit 208, voice synthesis section 16 interrupts the voice synthesis, which at this time is being performed based on voice data 120, and its output through speaker 12 (step 666), and reads from dictionary 36b voice data 139 of the common sentences stored in translation dictionary 36b and synthesizes the voice based on this voice data (step 666). Through this procedure, a common English sentence "I'm sorry, I made a mistake," for example, is outputted from speaker 12 in the present embodiment. After this step is completed, the control returns to detection 582 in FIG. 13 for the next "press" of operation switch 44. Here, the user can vocally input a different, desired word through microphone 10.

As was stated above, in the present embodiment, if the user wants to change the contents which are outputted during the voice synthesis process, the user can instantly interrupt the synthesis operation just by the simple operation of operation switch 44 and vocally output the common sentence, for example, a sentence which means the interruption of the process, through speaker 12.

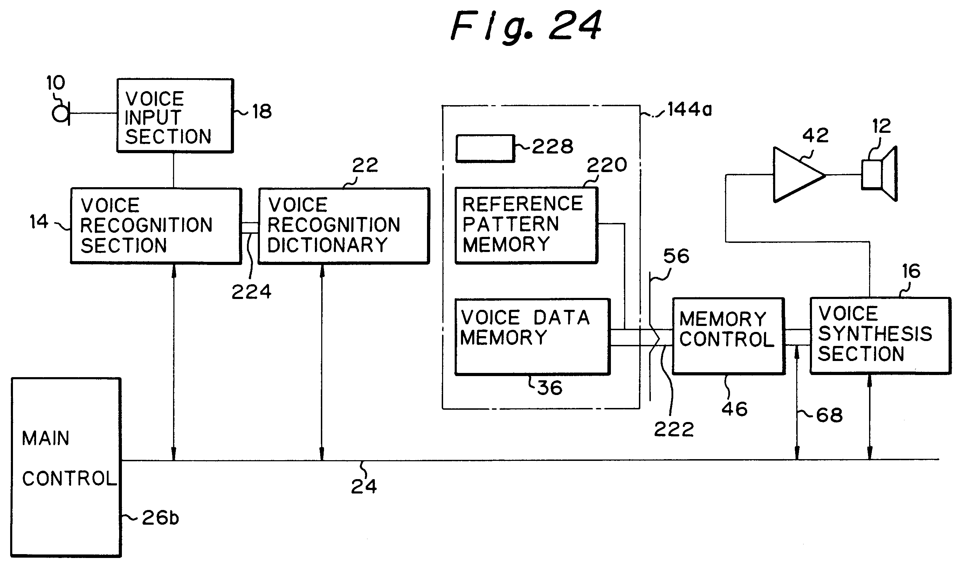

Incidentally, as was previously stated in regard to FIGS. 4A and 4B, the meanings of the word contents in translation dictionary 36 may be identical even if the language types are different in the various translation dictionaries 36. To pay attention to this point, another embodiment is shown in FIG. 24, in which if the examination of recognition code 124 does not show any change in the usage classification shown by recognition code 124 when memory card 144 has been exchanged, the initial cataloging sequence for cataloging the reference pattern in voice recognition dictionary 22 is simplified.

In the present embodiment, memory card 144a containing translation dictionary 36 also contains reference pattern memory region 220. This memory region 220 is a renewable memory region where the reference pattern stored in voice recognition dictionary 22 is stored. Of course, this memory region also is supported by a backup power source in order to maintain the non-volatility of the memory contents. Reference pattern memory region 220 and the translation dictionary, that is, voice synthesis data memory 33, share connector 56, and are connected to bus 222 leading to memory control section 46. In the same manner, reference pattern translation dictionary 36 is connected to bus 222 leading to memory control section 46, via removable connector 56. Memory card 144a has initial cataloging check bit 228 at a specific memory location. Initial cataloging check bit 228 is an indication bit which takes a significant value if the reference pattern data stored in reference pattern memory 220 has been initially cataloged in voice recognition dictionary 22, and an insignificant value if not initially cataloged.

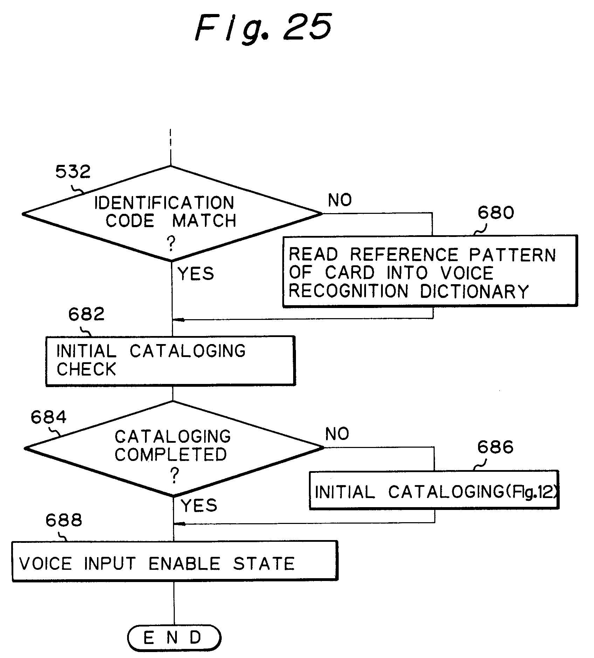

In the present embodiment, voice recognition dictionary 22 also is connected to system bus 24 by internal transfer bus 225. Main control section 26b may basically be the same as, for example, main control section 26 explained referring to FIG. 1, but in the present embodiment, it is configured to follow the operational sequence shown in FIG. 25.

In operation, the operational steps up to step 532 wherein it is checked whether identification codes 124 match are the same as the steps shown in FIG. 10. Referring to FIG. 25, if identification codes 124 do not match, main control section 26b reads the reference pattern data from reference pattern memory region 220, and this data is stored in voice recognition dictionary 22 via bus 222, system bus 24 and internal bus 225 (step 680). This means that the memory card previously used by this device had a usage different from memory card 144a presently loaded in the device, meaning, therefore, that the reference pattern data has been read into voice recognition dictionary 22 from memory card 114a. Afterward, main control section 26b proceeds to initial cataloging check step 682, which is explained later.

In step 532, if identification codes 124 match, main control section 26b directly proceeds to initial cataloging check step 682, wherein it checks check bit 228 of memory card 144. This means that the memory card used previously in this device had the same usage as memory card 144a loaded presently in the device, meaning, therefore, that it is unnecessary for the reference pattern data to be read into voice recognition dictionary 22 from memory card 144a. If this check bit is significant, since it means that the reference pattern has been already stored in voice recognition dictionary 22 (step 684), main control section 26b proceeds to voice input enable state 688. This state 688 may be the same as, for example, "press" wait status 580 of mode switch 48 shown in FIG. 13. If initial cataloging check bit 228 is not significant, since it means that the reference pattern data has not been stored in voice recognition dictionary 22, main control section 26b performs initial cataloging routine 686 as was previously explained referring to FIG. 12. Afterward, it moves to operation mode 688.

In the present embodiment, if the power source switch of the device,, not shown, is turned off, main control section 26b reads, in response to this, the reference pattern data stored in voice recognition dictionary 22, and this data is transferred to memory card 144b, through system bus 24 and synthesis section data bus 68, so as to be stored in its reference pattern memory region 220. Hereafter, if this card 144a is loaded, this reference pattern data 220 is used.

As is evident from this explanation, in the present embodiment, as long as memory card 144a having the same usage category represented by identification code 124 is used, it is only once that the reference pattern data has to be cataloged in voice recognition dictionary 22. For example, if an initial cataloging is performed using an English memory card 144a for general travelling, the initially cataloged reference pattern using this card can be used without modification for another memory card which belongs to the same usage category but is made for a different language, for example, a German memory card for general travelling. Therefore, the initial cataloging does not need to be performed.

As is shown above, in the present embodiment, since memory card 144a contains renewable memory region 220 for the reference pattern data beside memory region 36 for the voice synthesis data, the initial cataloging step of the reference pattern data can be simplified when a memory card different from previously loaded memory card 114 is loaded in this device.

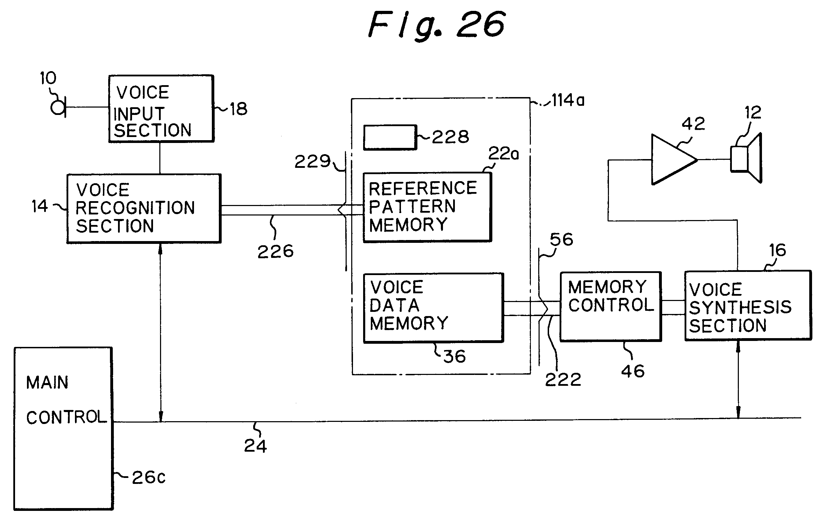

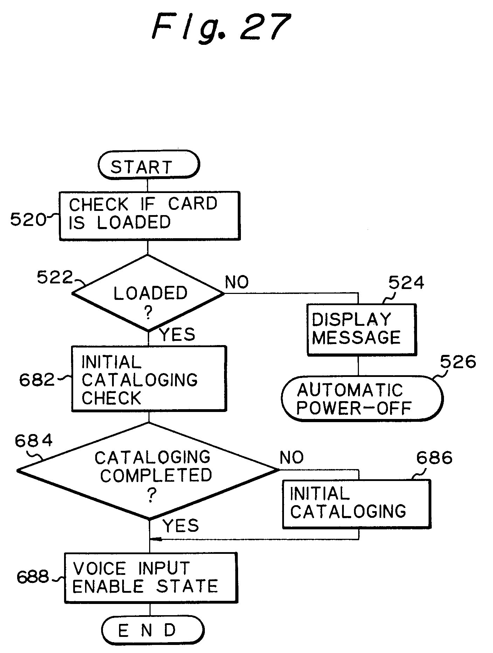

FIG. 26 shows an alternative embodiment of the embodiment shown in FIG. 24. The present embodiment is basically the same as the embodiment shown in FIG. 24, but it is different in that voice recognition dictionary 22 in the embodiment shown in FIG. 1 is realized as renewable memory region 22a located in memory card 144b. Therefore, recognition section data bus 226 which is connected to voice recognition section 14 is housed in a different connector 229, and this connector 229 is removably connected to memory card 144b, as is shown in the figure. Further, this memory card 144b does not need to have a region for storing identification code 124. Main control section 26b may be basically the same as, for example, main control section 26a shown in FIG. 24, but in the present embodiment, it is configured to perform the operation sequence shown in FIG. 27.

In operation, the steps up to step 522 wherein it is checked as to whether memory card 144b is actually loaded during the operation mode is the same as in the steps shown in FIG. 10. However, they are different in that, when loading of card 144b is detected in step 522, initial cataloging check step 682 is immediately followed without checking whether identification codes 124 match. In other words, if check bit 228 of memory card 144b is significant, main control section 26b proceeds to voice input enable state 688, and if insignificant, it initiates initial cataloging routine 686.

In this way, in the present embodiment, since memory card 144b contains renewable memory region 22a for the reference pattern data, in addition to memory region 36 for the voice synthesis data, the initial cataloging step for the reference pattern can be simplified when a card different from the previously loaded memory card 144b is loaded in this device.

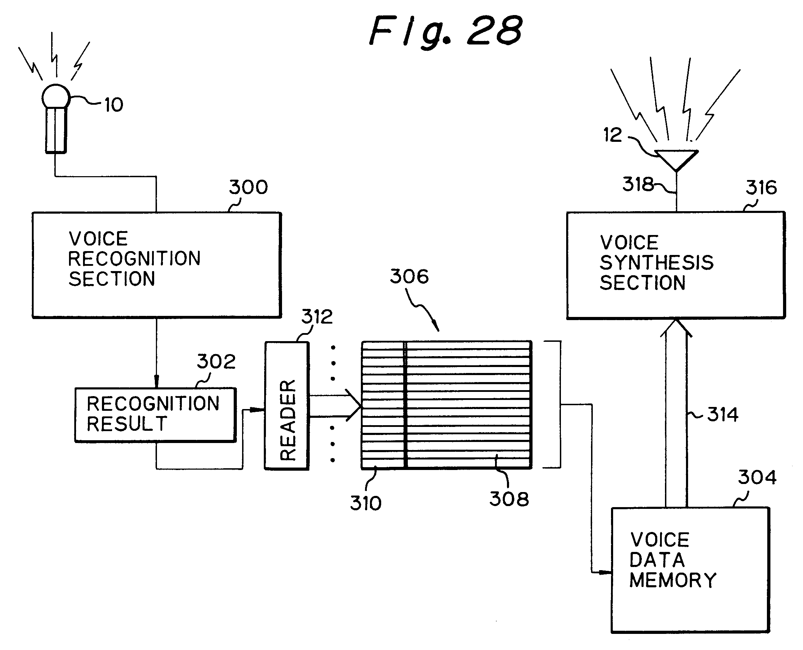

Referring to FIG. 28, another alternative embodiment of the present invention is shown. The present embodiment is a voice recognizing translation device by which, when a key word is vocally inputted through microphone 10, a corresponding voice, for example, a voice in a different language, is outputted in the form of a sentence through speaker 12. Microphone 10 is connected to voice recognition section 300. Voice recognition section 300 is a functional section containing configurational elements equivalent to, for example, voice input section 18, voice recognition section 14 and voice recognition dictionary 22 in the embodiment explained in regard to FIG. 1. The recognized result is outputted from voice recognition section 300 in the form of code 302 representing the key word.

This device has voice data memory 304 wherein the voice data shown by reference number 120 is stored, and this voice data memory 304 is a memory device having the same configuration and functions as, for example, translation dictionary 36 of the embodiment shown in FIG. 1. Voice data 120 is stored at the memory locations in the form of a sentence, phrase and/or words in the same manner as translation dictionary 36. For example, an English sentence "Coffee, please" is compression-encoded and stored in certain memory locations. These memory locations are designated by searching correspondence table memory 306. In correspondence table memory 306, address value 308 for designating the memory locations of voice data memory 304 is stored corresponding to key word code 310. As for this key word code 310, the key word code matching recognition result 302 is searched by reader 312. Read output 314 from voice data memory 304 is connected to voice synthesis section 314.

Voice synthesis section 316 is a memory device having the same configuration and function as, for example, voice synthesis section 16, voice output section 40, and output amplifier 42 of the embodiment shown in FIG. 1. Its output 318 is connected to speaker 12. This device contains other elements, such as display section 32, beside these configurational components, but only pertinent elements are shown in the figure, in order to avoid a lengthy explanation.

In operation, the user vocally inputs a key word, for example, "Coffee," through microphone 10. This key word is recognized by voice recognition section 300 and the code representing "Coffee" in this case is given as recognition result 302 from voice recognition section 300 to reader 312. Reader 312 searches correspondence memory 306 based on recognition result 302, in order to find the one, which matches key word code 302, from key word code 310 in memory 306. If matching key word code 310 is located, reader 312 reads corresponding address value 308 from memory 306. This address value 308 shows the storage locations of voice data memory 304 and is sent to voice data memory 304. In response to this, voice data memory 304 reads the voice data from the memory location designated by the address. In the above mentioned case, a compression-encoded voice data representing an English sentence "Coffee, please," for example, is read. This voice data is sent to voice synthesis section 316, is decompressed and decoded, and the English sentence "Coffee, please" is generated by speaker 12.

As was explained above, in the present embodiment, if a short key word, for example, a Japanese word "Koohii," is vocally inputted through microphone 10, its corresponding English sentence "Coffee, please" comes out of speaker 12. Therefore, a small amount of information input can produce a large amount of information output. In the above mentioned embodiments, exactly the same amount of information as the amount of inputted information is retained in the output. Therefore, in order to obtain an output carrying a large amount of information, such as a long sentence, it is necessary for the user to input a voice carrying a correspondingly large amount of information. However, in the present embodiment, only a simple key word has to be inputted to obtain a corresponding output carrying a large amount of information. Therefore, the operational load on the user is reduced.

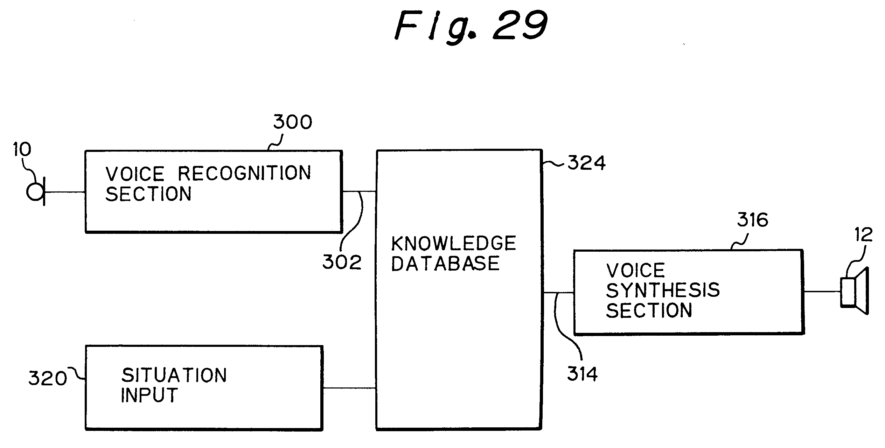

FIG. 29 shows another alternative embodiment of the present invention. The present embodiment is a voice recognizing translation device by which, when a key word is vocally inputted through microphone 10 and an instruction representing a certain situation is additionally inputted by situation input device 320, its corresponding voice, such as a voice in a different language, is outputted in the form of a sentence from speaker 12. Microphone 10 is connected to voice recognition section 300. Output 302 from voice recognition section 300 is connected to knowledge data base 324.

Knowledge data base 324 is a processing system that receives the recognition result, for example, code 302 representing the key word, which is outputted from voice recognition section 300, and outputs such voice data as shown by reference number 120 in FIG. 3, based on the situation data inputted from situation input device. The situations include, for example, "shopping," "restaurant," "rest," and the like in the present embodiment, and these situations can be selected by operating input device 320. As for the selection, a single selection may be made or compound conditional selections may be made based on an AND logic. In the latter case, a more complex situation can be set. As for situation input device 320, it may consist of operational keys, for example, or voice recognition section 300 may be provided with a function for identifying such situations; voice recognition section 300 may be configured so that various situations can be vocally inputted through microphone 10 with an additional appropriate command and identified by the voice recognizing process.

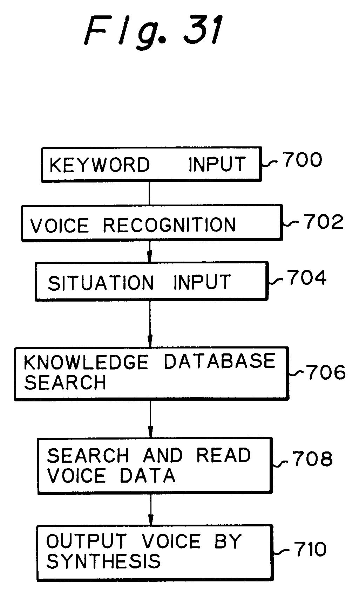

Knowledge data base 324 contains, as is shown in FIG. 31, reader 312a, correspondence table memory 306a and voice data memory 304a, which are equivalent to reader 312, correspondence memory 306 and voice data memory 304, respectively, of the translation device shown in FIG. 28, but it is different in some areas, which will be explained below. In the present embodiment, multiple English sentences, such as "How much is this coffee?," "A cup of coffee, please," and "Let's go to have a cup of coffee," which pertain to a key word "Koohii," are stored at separate memory locations in voice data memory 304a. Also, address value 308, which designates the memory location of voice data memory 304a, is stored in correspondence table memory 306a, in correspondence to key word code 310, and data 324, which represents the situation. Reader 312a, being connected to output 302 from voice recognition 300 and situation input 320, has the function of searching correspondence table 306a according to the two conditions which are presented by key word code 302 outputted from voice recognition 300, and situation input 320.

In operation, the user vocally inputs a key word, for example, "Koohii," through microphone 10 (step 700, FIG. 31). This key word is recognized by voice recognition 300 (step 700), and in this example, code 302 representing "Koohii" is given to reader 312a from voice recognition section 300. At this point, the user inputs the situation selection by input device 320 (step 704).

Then, reader 312a searches correspondence memory table 302, based on recognition result 302 and inputted situation selection 320, and locates those which match key word code 302 and situation input 320 from among key word codes 310 and situation data 324 in memory 306a, respectively. If matching key word code 310 and situation data 324 are located, reader 312a reads their corresponding address value 308 from memory 306a. This address value 308, which shows the storage location of voice data memory 304a, is sent to voice data memory 304a (step 706). In response to this, voice data memory 304a reads the voice data from the memory locations designated by the address.

In the above mentioned example, if "shopping," for example, is selected as the situation, the compression-encoded voice data presenting the English sentence "How much is this coffee?" is read. In the same manner, if situations "restaurant" and "rest" are selected," the compression-encoded voice data 314 representing respective English sentences "A cup of coffee, please" and "Let's go to have a cup of coffee" are read (step 708). This voice data 314 is sent to voice synthesis section 316, decompressed and decoded, and the voice in English representing this data comes out of speaker 12 (step 710).

Incidentally, steps 700 and 702, and step 704 shown in FIG. 31 may change places with each other. More specifically, the device may be configured so that a situation selection is first inputted through input device 320 and followed by a key word inputted through microphone 10.

In this manner, in the present embodiment, the most appropriate output can be obtained by selecting plural situations for a single key word, expanding the useful range of the key word. Also, the device may be configured so that plural key words can be inputted to obtain a longer sentence output by their combination.

While the present invention has been described with reference to the particular illustrative embodiments. It is not to be restricted by those embodiments but only by the appended claims. It is to be appreciated that those skilled in the art can change or modify the embodiments without departing from the scope and spirit of the present invention.

**Claims**

1. A voice processing device, comprising:
    input means for receiving a voice signal representing a word;
    voice recognition means interconnected to said input means for recognizing the word represented by the voice signal and producing an indication representing the recognized word;
    output means for reading out an output signal, corresponding to the indication, from a storage medium where the output signal is stored in correspondence to the indication; and
    control means interconnected to said voice recognition means and output means for controlling said voice recognition means and output means to cause the output signal corresponding to the voice signal to be developed;
    CHARACTERIZED IN THAT

said control means (26, 34, 28, 30, 24, 44, 48) comprises:
    holding means (58) for holding the indication developed from said voice recognition means (20, 14, 22); and
    command means (44, 60) for entering a command causing the output signal developed from said output means (16, 40, 42, 12) to be developed again;
    said control means (26, 34, 28, 30, 24, 44, 48) being operative in response to the indication developed from said voice recognition (20, 14, 22) to transfer the indication to said output means (16, 40. 42, 12) and store the indication in said holding means (58), and in response to said command means (44, 60) to transfer the indication held in said holding means (58) to said output means (16, 40, 42, 12).

2. A device in accordance with claim 1, CHARACTERIZED IN THAT said output means comprises conversion means (16, 40) for converting the output signal to the voice signal.

3. A device in accordance with claim 2,
    CHARACTERIZED IN THAT
    the output signal representing the voice signal is stored in said storage medium (36), in correspondence to the indication; and
    said output means (16, 40, 42, 12) comprises reproduction means (42, 12), including loud speaker (12), for reproducing the voice signal developed from said conversion means (16, 40) in the form of a voice signal.

4. A device in accordance with claim 3,
    CHARACTERIZED IN THAT
    the output signal representing the voice signal is stored in said storage medium in the compression-encoded form; and
    said conversion means (16, 40) comprises supply means (16) for decoding and decompressing the output signal and supplying said reproduction means (42, 12) with the resulting signal.

5. A device in according with claim 2, CHARACTERIZED IN THAT the output signal representing the voice signal for a language different from the language recognized by said voice recognition means (20, 14, 22) is stored in said storage medium (36), in correspondence to the indication.

6. A voice processing device, comprising:
    input means for receiving a voice signal representing a word;
    voice recognition means interconnected to said input means for recognizing the word represented by the voice signal and producing an indication representing the recognized word;

output means for reading out an output signal, corresponding to the indication, from a storage medium where the output signal is stored in correspondence to the indication; and

control means interconnected to said voice recognition means and output means for controlling said voice recognition means and output means to cause the output signal corresponding to the voice signal to be developed;

CHARACTERIZED IN THAT

said storage medium (36) is discrete memory device (144, 144a) by itself and is provided with memory locations where the output signal is stored in correspondence to the indication; and

said output means (16, 40, 42, 12, 56, 46) comprises connecting means (56) for connecting removably said storage medium (36) to said output means (16, 40, 42, 12, 56, 46).

7. A device in accordance with claim 6,
CHARACTERIZED IN THAT

said storage medium (36) contains identification code (124) which shows the category of said storage medium (36), and the category of said storage medium (36) includes types and purposes of the output signal;

said control means (26, 34, 28, 30, 24) comprises holding means (30) for holding identification code (124); and

said control means (26, 34, 28, 30, 24) reads identification code (124) from said storage medium (36), compares it to the identification code held in said holding means (30), and activates said voice recognition means (20, 14, 22) if both codes match.

8. A device in accordance with claim 7, wherein said voice recognition means contains a recognition dictionary means where the reference voice signal, which is used for recognizing the word contained in the voice signal, is renewably cataloged;

said voice recognition means being provided with first operation mode, and in the first operation mode, said voice recognition means catalogs the voice signal, which is received by said input means, in said recognition dictionary means as the reference voice signal which corresponds to the voice signal;

said voice recognition means being provided with second operation mode, and in the second operation mode, the word contained in the voice signal is recognized by comparing the voice signal, which is received by said input means, to the reference voice signal;

CHARACTERIZED IN THAT

if identification code (124) read from said storage medium (36) does not match the identification code held in said holding means, said control means (26, 34, 28, 30, 24) controls said voice recognition means (20, 14, 22) so that said voice recognition means (20, 14, 22) moves to the first mode.

9. A device in accordance with claim 6,
CHARACTERIZED IN THAT

said device further comprises:

display means (32) for visualizing the output signal; and

command means (44) interconnected to said control means (26, 34, 28, 30, 24) for entering a command causing the output signal to be visualized; and

said control means (26, 34, 28, 30, 24) being operative in response to said command means (44) to control said display means (32) to cause said display means to visualize the output signal.

10. A device in accordance with claim 6, CHARACTERIZED IN THAT said output means (16, 40, 42, 12, 56, 46) comprises conversion means (16, 40) for converting the output signal into the voice signal.

11. A device in accordance with claim 10,
CHARACTERIZED IN THAT

the output signal representing the voice signal is stored in correspondence to the indication;

said output means (16, 40, 42, 12, 56, 46) comprising reproduction means (42, 12) including a loud speaker (12) for reproducing the voice signal, which is outputted from said conversion means (16, 40), in the form of a voice.

12. A device in accordance with claim 11,
CHARACTERIZED IN THAT

the output signal representing the voice signal is stored in said storage medium (36) in the compression-encoded form;

said conversion means (16, 40) comprising supply means (16) for decoding and decompressing the output signal and supplying said reproduction means (42, 12) with the resulting signal.

13. A device in accordance with claim 10, CHARACTERIZED IN THAT the output signal representing the voice signal in a language different from the language recognized by said voice recognition means (20, 14, 22) is stored in said storage medium (36), in correspondence to the indication.

14. A voice processing device comprising:

input means for receiving the voice signal representing the word;

voice recognition means interconnected to said input means for recognizing the word represented by the voice signal and outputting first indication representing the recognized word;

storage means provided with plural memory locations, at one of which the output signal representing the words is stored;

output means interconnected to said storage means for reading out the output signal corresponding to the first indication, from said storage means; and

control means interconnected to said voice recognition means and output means for controlling said voice recognition means and output means to output the output signal corresponding to the voice signal,

CHARACTERIZED IN THAT

said control means comprises correspondence establishing means (312, 306) for outputting the second indication which establishes a correspondence between the key word and one of the plural memory locations;

said correspondence establishing means (312, 306) receiving the word outputted from said voice recognition means as key word (302) and transferring the second indication, which corresponds to key word (302), to said storage means (304, 314);

said storage means (304, 314) reading the output signal, which is stored at the memory locations, from the memory locations represented by the second indication and outputs it to said output means (316, 318, 12).

15. A device in accordance with claim 14,

CHARACTERIZED BY

situation input means (320) for inputting a code expressing the situation;

said correspondence establishing means (324, 312a, 306a, 310, 308) outputting the signal representing the memory location in said storage means (304, 314), as the second indication, in correspondence to key word (302) and the situation.

16. A device in accordance with claim 14, CHARACTERIZED IN THAT said output means (316, 318, 12) comprises conversion means (316) for converting the output signal to the voice signal.

17. A device in accordance with claim 16,

CHARACTERIZED IN THAT

the output signal representing the voice signal is stored in said storage means (304, 314), in correspondence to the indication;

said output means (316, 318, 12) comprising reproduction means (12, 318) including loud speaker (12) for reproducing the voice signal outputted from said conversion means (316), in the vocal form.

18. A device in accordance with claim 17,

CHARACTERIZED IN THAT

the output signal representing the voice signal is stored in said storage means (304, 314), in the compression encoded form;

said conversion means (316) comprising supply means (316) for decoding and decompressing the output signal and supplying said reproduction means (12, 318) with the resulting signal.

19. A device in accordance with claim 16, CHARACTERIZED IN THAT the output signal representing the voice signal of a language different from the language recognized by said voice recognition means (300) is stored in said storage means (304, 314), in correspondence to the indication.

20. A voice processing device comprising:

input means for receiving the voice signal representing the word;

voice recognition means interconnected to said input means for recognizing the word represented by the voice signal and outputting the indication representing the recognized word;

display means for visualizing the display;

output means for reading out the output signal, which corresponds to the indication, from said storage medium where the output signal is stored in correspondence to the indication; and

control means interconnected to said voice recognition means, display means and output means for controlling said voice recognition means, display means and output means so that the display is visualized on said display means and the output signal, which corresponds to the voice signal, is outputted to said output means;

CHARACTERIZED IN THAT

said device further comprises timer means (34) for clocking prescribed duration (t0), under the control of said control means (26, 34, 28, 30, 24, 44, 48);

said control means (26, 34, 28, 30, 24, 44,

20

48) initiating, when the indication is outputted from said voice recognition means (20, 14, 22), the clocking of said prescribed duration (t0) by said timer means (34), and transferring, when the elapse of said prescribed duration (t0) is clocked by said timer means (34), the outputted indication to said display means (16, 40, 42, 12).

21. A device in accordance with claim 20,
    CHARACTERIZED BY
    command means (44) for entering the command to change the display visualized on said display means (32);
    said control means (26, 34, 28, 30, 24, 44, 48) making, when the command is inputted from said command means (44) before said timer means (34) finishes clocking the elapse of said prescribed duration (t0), said voice recognition means (20, 14, 22) output the indication which represents the next word in line among the words recognized by said voice recognition means (20, 14, 22).

22. A device in accordance with claim 20, CHARACTERIZED IN THAT said output means (16, 40, 42, 12) comprises conversion means (16, 40) for converting the output means to the voice signal.

23. A device in accordance with claim 22,
    CHARACTERIZED IN THAT
    the output signal representing the voice signal is stored in said storage medium (36), in correspondence to the indication;
    said output means (16, 40, 42, 12) comprising reproduction means (42, 12) including a loud speaker (12) for reproducing the voice signal outputted from said conversion means (16, 40) in the vocal form.

24. A device in accordance with claim 23,
    CHARACTERIZED IN THAT
    the output signal representing the voice signal is stored in said storage means (36), in the compression-encoded form;
    said conversion means (16, 40) comprising supply means (16) for decoding and decompressing the output signal and supplying said reproduction means (42, 12) with the resulting signal.

25. A device in accordance with claim 22, CHARACTERIZED IN THAT the output signal representing the voice signal in a language different from the language recognized by said voice recognition means (20, 14, 22) is stored in said storage medium (36), in correspondence to the indication.

26. A voice recognition means comprising:
    input means for receiving a voice signal representing a word;
    recognition dictionary means wherein the voice signal received by said input means is renewably cataloged as the reference voice signal;
    voice recognition means, interconnected to said input means and recognition dictionary means and also provided with the first operation mode, and the second operation mode, for recognizing the word represented by the received voice signal by comparing the voice signal received by said input means to the reference voice signal and outputting the indication representing the recognized word in the second mode; and
    control means interconnected to said voice recognition means for controlling said voice recognition means so that the voice signal received by said input means is cataloged in said recognition dictionary means, as the reference voice signal, in correspondence to the indication,
    CHARACTERIZED IN THAT
    said device further comprises command means (44) connected to said control means (26, 34, 28, 30, 24, 126) for entering the command to negate the cataloging of the reference voice signal, in correspondence to the indication;
    said control means (26, 34, 28, 30, 24, 126) comprising holding means (30, 126) for holding the command in correspondence to the indication; and
    said control means (26, 34, 28, 30, 24, 126) holds the command in said holding means (30, 126) corresponding to the indication when the command is inputted from said command means (44) in the first operation mode, and controls said voice recognition means (14) to prevent the reference voice signal from being cataloged for the indication corresponding to the command held in said holding means (30, 126).

27. A device in accordance with claim 26,
    CHARACTERIZED BY
    display means (32) for displaying visually the word to be cataloged;
    said control means (26, 34, 28, 30, 24, 126) controlling said display means (32) to cause the word to be cataloged to be displayed on said display device (32) and also said input means to be enabled, if the command is not held in said holding means (30, 126) in the first operation mode.

**28.** A device in accordance with claim 26, CHARACTERIZED BY output means (16, 46, 42, 12) for reading and outputting the output signal which corresponds to the indication outputted from said voice recognition means (14), from said storage medium (36) where the output signal is stored in correspondence to the indication.

**29.** A device in accordance with claim 28, CHARACTERIZED IN THAT

said device further comprises connection means (229, 226, 56, 222) for connecting removably said recognition dictionary means (22a) and said storage medium (36) to said voice recognition means (14) and said output means (16, 46, 42, 12), respectively;

said recognition dictionary means (22a) itself forming a discrete storage device, as said storage medium (36) does, and being removably connected to said voice recognition means (14).

**30.** A device in accordance with claim 28, CHARACTERIZED IN THAT said output means (16, 46, 42, 12) comprises conversion means (16) for converting the output signal to the voice signal.

**31.** A device in accordance with claim 30, CHARACTERIZED IN THAT

the output signal representing the voice signal is stored in said storage medium (36), in correspondence to the indication;

said output means (16, 46, 42, 12), which includes a loud speaker (12), comprising reproduction means for reproduce the voice signal outputted from said conversion means (16), in the vocal form.

**32.** A device in accordance with claim 31, CHARACTERIZED IN THAT

the output signal representing the voice signal is stored in said storage medium (36) in the compression-encoded form;

said conversion means (16) comprising supply means (16) for decoding and decompressing the output signal and supplying said reproduction means (42, 12) with the resulting signal.

**33.** A device in accordance with claim 30, CHARACTERIZED IN THAT the output signal representing the voice signal in a language from the language recognized by said voice recognition means (14) is stored in said storage medium (36).

**34.** A voice processing device comprising:

input means for receiving a voice signal representing a word;

voice recognition means interconnected to said input means for recognizing the word represented by the voice signal and outputting the indication representing the recognized word;

output means for reading and outputting the output signal, which corresponds to the indication, from the storage medium where the output signal is stored in correspondence to the indication; and

control means interconnected to said voice recognition means and output means for controlling said voice recognition means and output means to output the output signal which corresponds to the voice signal, CHARACTERIZED IN THAT

said input means (10, 18) further comprises:

voice input means (10, 18) including microphone (10) for receiving the voice and converting it to the voice signal under the control of said control means (26, 34, 28, 30, 24); and

command means (44) interconnected to said control means (26, 34, 28, 30, 24) for entering a command enabling the voice to be inputted to said voice input;

said control means (26, 34, 28, 30, 24) making it possible for the voice to be inputted to said voice input means (10, 18) only when the command from said command means (44) is present.

**35.** A device in accordance with claim 34, CHARACTERIZED IN THAT said output means (16, 46, 42, 12) comprises conversion means (16) for converting the output signal to the voice signal.

**36.** A device in accordance with claim 35, CHARACTERIZED IN THAT

the output signal representing the voice signal is stored in said memory means (36) in correspondence to the indication; and

said output means (16, 40, 42, 12) including a loud speaker (12) comprises reproduction means (42, 12) for reproducing the voice signal outputted from said conversion means (16, 40) in the vocal form.

**37.** A device in accordance with claim 36, CHARACTERIZED IN THAT

the output signal representing the voice signal is stored in said storage medium (36) in the compression-encoded form; and

said conversion means (16, 40) comprises supply means (16) for decoding and decompressing the output signal and supplying said reproduction means (42, 12) with the resulting signal.

38. A device in accordance with claim 35, CHARACTERIZED IN THAT the output signal representing the voice signal in a language different from the language recognized by said voice recognition means (20, 14, 22) is stored in said storage medium (36) in correspondence to the indication.

39. A voice processing means comprising:

input means for receiving a voice signal representing a word;

voice recognition means interconnected to said input means for recognizing the word represented by the voice signal and outputting the indication representing the recognized word;

output means for reading out the output signal, which corresponds to the indication, from the storage medium containing the memory locations where the output signal is stored in correspondence to the indication; and

control means interconnected to said voice recognition means and output means for controlling said voice recognition means and output means to output the output signal which corresponds to the voice signal;

CHARACTERIZED IN THAT

said storage medium (366) contains additional memory locations (139) where a prescribed output signal is stored;

said device further comprising command means (44) interconnected to said control means (26, 34, 28, 30, 24) for entering the command to interrupt the output of the output signal from said output means (16, 40, 42, 12);

said control means (26, 34, 28, 30, 24) controlling said output means (16, 40, 42, 12) in response to the command so that the output of the output signal from said output means (16, 40, 42, 12) is interrupted, and then, the prescribed output signal is read from said storage medium (36) by said output means (16, 40, 42, 12) and outputted by said output means (16, 40, 42, 12).

40. A device in accordance with claim 39, CHARACTERIZED IN THAT said output means (16, 40, 42, 12) comprises conversion means (16, 40) for converting the output signal to voice signal.

41. A device in accordance with claim 40, CHARACTERIZED IN THAT

the output signal representing the voice signal is stored in said storage medium (37) in correspondence to the indication;

said output means (16, 40, 42, 12) including a loud speaker (12) comprising reproduction means (42, 12) for reproducing the voice signal outputted from said conversion means (16, 40) in the vocal form.

42. A device in accordance with claim 41, CHARACTERIZED IN THAT

the output signal representing the voice signal is stored in said storage medium (36) in the compression-encoded form; and

said conversion means (16, 40) comprises supply means (16) for decoding and decompressing the output signal and supplying said reproduction means (42. 12) with the resulting signal.

43. A device in accordance with claim 40, CHARACTERIZED IN THAT the output signal representing the voice signal in a language different from the language recognized by said voice recognition means (20, 14, 22) is stored in said storage medium (36) in correspondence to the indication.

# Fig. 1

EP 0 472 193 A2

# Fig. 2

FROM
MICROPHONE 10

18

| AMPLIFIER | ~100 |
| LOW-PASS FILTER | ~102 |
| A/D CONVERTER | ~104 |
| BAND-PASS FILTER | ~106 |
| VOICE SEGMENT DETECTOR | ~108 |

~20

| MEMORY 112 | MATCHING SECTION 110 | REFERENCE PATTERN 22 |

14

TO BUS 24

# Fig. 3

<u>36</u>                                                         <u>30</u>

| IDENTIFICATION CODE |
|---|
| VOICE DATA #1<br>"Coffee.please." |
| VOICE DATA #2<br>"Hello." |

| VOICE DATA #n |
|---|
| READ DISPLAY DATA #1<br>"Koohii" |
| READ DISPLAY DATA #2<br>"Konnichiwa" |

| READ DISPLAY DATA #n |
|---|

124 120 120

| READ DISPLAY DATA #1<br>"Koohii" | |
|---|---|
| READ DISPLAY DATA #2<br>"Konnichiwa" | |

| READ DISPLAY DATA #n | |
|---|---|
| END CODE | |

128 126

128

122

122

130

126

# Fig. 4A

36

```
I'M  SORRY
SHEET
SEAT
FREE
COFFEE
TEA
WATER
WHISKY
WHISKY  AND  WATER
BEER
MEAT
FISH
WINE  LIST
WINE
```

```
COLOR
SHIPPING
HOW  MUCH
SIZE
DISCOUNT
CARD
REPAIR
FILM
INITIAL
SIZE
JAPANESE
I CANNOT  DO  IT
```

# Fig. 4B

36

```
I'M  SORRY
SHEET
SEAT
FREE
COFFEE
TEA
WATER
WHISKY
WHISKY  AND  WATER
BEER
MEAT
FISH
WINE  LIST
WINE
```

```
SWIMMING
TRUCK
BASKET  BALL
JUDOO
JIMNASTIC
VALLEY  BALL
```

# Fig. 5

START

TIMER ON ~500

HOW MANY TIMES OPERATION SWITCH WAS CLICKED AFTER THE ELAPSE OF THE PRESCRIBED PERIOD ? — 502

MORE THAN ONCE

ONCE

CONTINUE

DOUBLE CLICKS — 508

PRESS — 504

SINGLE CLICK — 506

END

28

# Fig. 6

# Fig. 7

# Fig. 8

# Fig. 9

# Fig. 11

| S1 | S2 | MESSAGE | OPERATION |
|----|----|---------|-----------|
| 0 | 0 | CARD IS NOT LOADED | AUTOMATIC POWER-OFF |
| 0 | 1 | CARD IS IMPROPERLY LOADED | |
| 1 | 0 | | |
| 1 | 1 | | TO NORMAL OPERATION |

EP 0 472 193 A2

# F I g. 10

```
                    ┌──────────────┐
                    │    START     │
                    └──────┬───────┘
                           │              520
        ┌──────────────────┴──────────────────┐
        │     CARD LOADING CHECKUP             │
        └──────────────────┬──────────────────┘
                           │
     522                   ◇
              ┌─────────────────────┐  NO
              │      LOADED ?       │──────────────────┐
              └─────────────────────┘                  │        524
                           │ YES                 ┌──────┴───────────────┐
    528                    │                     │  MESSAGE  DISPLAY     │
        ┌──────────────────┴──────┐              └──────────┬───────────┘
        │  READ  IDENTIFICATION   │                         │
        │  CODE  FROM  CARD       │              ┌──────────┴───────────┐
        └──────────────────┬──────┘              │ AUTOMATIC POWER-OFF  │
  530                      │                      └──────────────────────┘
 ┌───────────────────────┴──────────┐                      526
 │ COMPARE  TO  IDENTIFICATION      │
 │ CODE  STORED  IN                 │
 │ CONTROL  SECTION                 │
 └───────────────────────┬──────────┘
                          │
     532                  ◇
              ┌────────────────────┐  NO      TO CATALOGING
              │      MATCH ?       │────────► MODE
              └────────────────────┘
                          │ YES
                          │
                   TO OPERATION
                   MODE
```

# F l g. 12A

```
                    ( START )
                        │
        ┌───────────────────────────────────┐
        │ TRANSFER TABLE REGION DATA        │
        │ 36 IN MEMORY CARD 144 TO          │ ~540
        │ WORK MEMORY 30                    │
        │      N = 1    M = 1               │
        └───────────────────────────────────┘
```

(A)

CATALOG READ DATA ? — 542    NO

TRANSFER READ DATA N TO DISPLAY — 544    YES

OPERATION SWITCH ON ? — 550    NO

OPERATION SWITCH PRESSED OR CLICKED ? — 552    CLICK — (C)

COMPUTE CHARACTERISTIC QUANTITY — 558    PRESS

WRITE IN REFERENCE PATTERN MEMORY — 560

(B)

N+1 FOR READ DATA MATCHES END CODE ? — 546    YES — (D)

SUBSTITUTE N WITH N+1 — 548    NO

33

# F I g. 12B

(C)

554

M EQUALS 1 ? —— NO

YES

SET "1" IN REQUEST FLAG 126 ~556

(B)

(D)

562

M EQUALS m ? —— NO

YES

E N D

564

M = M + 1
N = 1

(A)

# F I g. 13

```
                    START

580        OPERATION              NO
             MODE
               ?

            YES

582        OPERATION             NO
          SWITCH IS HELD
             DOWN
               ?

       YES

584    RECOGNITION PROCESS
       (FIG. 17)

588    DISPLAY FIRST CANDIDATE
       ON DISPLAY


 SINGLE                                    DOUBLE
 CLICK                   590              CLICKS

596          CLICKED IN                        598
          PRESCRIBED PERIOD
 DISPLAY NEXT      ?              DISPLAY
 CANDIDATE                        "CANCEL"

                    NONE

592    STORE RECOGNITION CODE IN
       CODE REGISTER

       SEND RECOGNITION CODE TO VOICE    594
       SYNTHESIS SECTION


       SYNTHESIS PROCESS      600

       VOCAL OUTPUT           602


             DOUBLE              604
          CLICKS OF OPERATION         NO
             SWITCH
               ?
                         YES
                                      606
       SEND RECOGNITION CODE IN CODE REGISTER
       TO VOICE SYNTHESIS SECTION
```

*Fig.14A*

900

*Fig.14B*

FIRST CANDIDATE 902

*Fig.14C*

$t_0$

904

*Fig.15A*

900

*Fig.15B*

902 FIRST CANDIDATE    SECOND CANDIDATE 906

*Fig.15C*

$t_0$

904

$t_1$

*Fig.16A*

900

*Fig.16B*

902

FIRST CANDIDATE

$t_2$

36

# F l g. 17

START ～584

620

OUTPUT TO VOICE INPUT
SECTION COMMAND TO
INITIATE SEGMENTATION

622

SEGMENTATION
END SIGNAL
?
NO

624 YES

OUTPUT TO VOICE RECOGNITION
SECTION COMMAND TO INITIATE
RECOGNITION OPERATION BY
ANALYSIS

626

RECOGNITION
END SIGNAL
?
NO

628 YES

READ RECOGNITION CODE FROM
VOICE RECOGNITION SECTION

END

# F I g. 18

36g

| | |
|---|---|
| 132 — | VOICE DATA #1 | ⁀ 120 |
| | VOICE DATA #2 |
| | VOICE DATA #3 | ⁀ 120 |
| | |
| 132 — | VOICE DATA #64 |
| 138 — | DISPLAY DATA #1 | ⁀ 136 |
| | DISPLAY DATA #2 |
| | |
| 138 — | DISPLAY DATA #64 | ⁀ 136 |
| 124 — | IDENTIFICATION DATA |
| 134 — | READ DISPLAY DATA #1 | ⁀ 122 |
| | READ DISPLAY DATA #2 |
| | |
| 134 — | READ DISPLAY DATA #64 | ⁀ 122 |

# Fig. 19

EP 0 472 193 A2

EP 0 472 193 A2

# Fig. 20

VOICE OUTPUT — 622

PRESENCE OF DOUBLE CLICKS ? — 642

NO

YES

MOVE DISPLAY DATA FROM ROM CARD TO WORK MEMORY — 644

VISUALIZE DISPLAY DATA ON THE DISPLAY — 646

VOICE SYNTHESIS PROCESS — 648

E N D

40

# Fig. 21

| | |
|---|---|
| VOICE DATA #1<br>"Coffee, please." | 120 |
| VOICE DATA #2<br>"Hello." | |

VOICE DATA #n — 120

| | |
|---|---|
| VOICE DATA #n+1<br>"I'm sorry,<br>I made a mistake." | 139 |
| READ DATA #1<br>"Koohli" | 122 |
| READ DATA #2<br>"Konnichiwa" | |

READ DATA #n — 122

# Fig. 22

# F l g. 23

```
┌─────────────────────┐
│  SYNTHESIS  PROCESS │ ∿600
└─────────────────────┘
           │
           │              660
           ▼
      ╱─────────────────╲
     ╱   DOUBLE  CLICKS   ╲      NO
    ╱  DURING  SYNTHESIS    ╲──────────────┐
     ╲         ?           ╱               │
      ╲─────────────────╱                  │
           │  YES        664         602   │
           ▼                          │    │
┌─────────────────────┐       ┌──────────────┐
│ INTERRUPT  SYNTHESIS│       │ VOICE  OUTPUT│
│ PROCESS             │       └──────────────┘
└─────────────────────┘               │
           │                          │
           ▼                          │
┌─────────────────────┐               │
│ COMMON  PHRASE      │ ∿666          │
│ SYNTHESIS           │               │
└─────────────────────┘               │
           │                          │
           ▼                          │
┌─────────────────────┐               │
│ COMMON  PHRASE      │ ∿668          │
│ OUTPUT              │               │
└─────────────────────┘               │
           │◄─────────────────────────┘
           ▼
      ╭─────────╮
      │  E N D  │
      ╰─────────╯
```

# Fig. 24

EP 0 472 193 A2

# Fig. 25

532 — IDENTIFICATION CODE MATCH ?

NO → 680 — READ REFERENCE PATTERN OF CARD INTO VOICE RECOGNITION DICTIONARY

YES

682 — INITIAL CATALOGING CHECK

684 — CATALOGING COMPLETED ?

NO → 686 — INITIAL CATALOGING(Fig.12)

YES

688 — VOICE INPUT ENABLE STATE

END

# Fig. 26

# Fig. 27

START

520 — CHECK IF CARD IS LOADED

522 — LOADED ? — NO → 524 DISPLAY MESSAGE → 526 AUTOMATIC POWER-OFF

YES

682 — INITIAL CATALOGING CHECK

684 — CATALOGING COMPLETED ? — NO → 686 INITIAL CATALOGING

YES

688 — VOICE INPUT ENABLE STATE

END

## Fig. 28

EP 0 472 193 A2

# Fig. 29

EP 0 472 193 A2

```
                              300
       ┌──────────────────────┐              ┌──────────────┐  324
  10   │  VOICE  RECOGNITION   │              │              │
   ○───│  SECTION              │──────────────│              │
       └──────────────────────┘              │  KNOWLEDGE   │       316
                            302               │  DATABASE    │  ┌──────────────┐   12
                                              │              │──│  VOICE       │
                                              │              │  │  SYNTHESIS   │──◁
       ┌──────────────────────┐              │              │  │  SECTION     │
  320  │  SITUATION           │──────────────│              │  └──────────────┘
       │  INPUT               │              │              │       314
       └──────────────────────┘              └──────────────┘
```

# Fig. 30

SITUATION INPUT — 320

FROM VOICE RECOGNITION SECTION 300 — 302

READER — 312a

306a

324  310  308

324  310  308

VOICE DATA MEMORY — 304a

TO VOICE SYNTHESIS SECTION 316

~314

EP 0 472 193 A2

# F I g. 31

```
KEYWORD     INPUT    ⌐700

VOICE  RECOGNITION   ⌐702

SITUATION   INPUT    ⌐704

KNOWLEDGE  DATABASE
SEARCH               ⌐706

SEARCH  AND  READ
VOICE  DATA          ⌐708

OUTPUT  VOICE  BY
SYNTHESIS            ⌐710
```